# EUROPÄISCHE PATENTSCHRIFT

(11) **EP 1 171 483 B1**
(45) Veröffentlichungstag und Bekanntmachung des Hinweises auf die Patenterteilung: **25.08.2004**
(21) Anmeldenummer: 00920600.4
(22) Anmeldetag: 28.03.2000
(51) Int. Cl.: C08F 10/00, C08F 4/625

(54) **VERFAHREN ZUR POLYMERISATION VON OLEFINEN**
METHOD FOR POLYMERISING OLEFINS
PROCEDE DE POLYMERISATION DES OLEFINES

(30) Priorität: 29.03.1999 US 277823; 14.05.1999 DE 19922048; 30.07.1999 DE 19935407
(43) Veröffentlichungstag der Anmeldung: 16.01.2002
(73) Patentinhaber: BASF AKTIENGESELLSCHAFT, 67056 Ludwigshafen (DE)
(72) Erfinder: MIHAN, Shahram, D-67061 Ludwigshafen (DE); KÖHN, Randolf, Bath BA2 2AZ (GB); SEIFERT, Guido, D-10623 Berlin (DE)
(86) Internationale Anmeldenummer: PCT/EP2000/002716
(87) Internationale Veröffentlichungsnummer: WO 2000/058370

(56) Entgegenhaltungen:
- CHEMICAL ABSTRACTS, vol. 129, no. 18, 2. November 1998 (1998-11-02) Columbus, Ohio, US; abstract no. 231170, TANI, KAZUHIDE ET AL: "Preparation of.alpha.-olefin polymers by the use of vanadium or chromium complex catalysts" XP002139748 in der Anmeldung erwähnt & JP 10 231317 A (MITSUBISHI CHEMICAL INDUSTRIES LTD., JAPAN) 2. September 1998 (1998-09-02)
- KOEHN, RANDOLF D. ET AL: "The Chemistry of 1,3,5-Triazacyclohexane Complexes. 7. Synthesis and Characterization of the Cobalt(II) Methoxide Core {Co3(OMe)4}2+" INORG. CHEM. (1997), 36(26), 6064-6069 , XP000914247

## Beschreibung

Gegenstand der vorliegenden Erfindung ist ein Verfahren zur Copolymerisation von Ethylen oder Propylen miteinander oder mit anderen olefinisch ungesättigten Verbindungen.

Weiterhin ist Gegenstand der vorliegenden Erfindung ein solches Verfahren, welches bei Temperaturen von 20 bis 300°C und Drücken von 5 bis 4000 bar durchgeführt wird, die Verwendung eines Komplexes eines Übergangsmetalls mit einem oder zwei substituierten oder unsubstituierten 1,3,5-Triazacyclohexan-Liganden oder entsprechenden Liganden, bei denen eines oder mehrere Ringstickstoffatome durch Phosphor- oder Arsenatome ersetzt sind, bei der Copolymerisation von Ethylen oder Propylen miteinander oder mit anderen olefinisch ungesättigten Verbindungen sowie Übergangsmetallkomplexe mit speziell substituierten Triazacyclohexanliganden.

Katalysatorsysteme mit einem einheitlich definierten, aktiven Zentrum, sogenannte Single-Site-Katalysatoren, gewinnen bei der Polymerisation von Olefinen immer mehr an Bedeutung. Diese Katalysatorsysteme führen zu Polymerisaten mit engen Molekulargewichtsverteilungen, was in besonders günstigen mechanischen Eigenschaften resultiert. Unter diesen Single-Site-Katalysatoren haben besonders die Metallocen-Katalysatoren bisher technische Bedeutung erlangt. Viele Metallocen-Katalysatoren sind jedoch nur durch vielstufige Synthesen zu erhalten und stellen daher einen beträchtlichen Kostenfaktor bei der Olefinpolymerisation dar.

Triazacyclohexan und seine Derivate, die sich durch unterschiedliche Substitutionen unterscheiden, sind seit langem bekannt und werden technisch vielseitig verwendet, da sie aus einfachen Ausgangsprodukten in einfacher und kostengünstiger Weise herstellbar sind. So werden Triazacyclohexan-Derivate beispielsweise bei der Entschwefelung von Kerosin eingesetzt. Die Verwendung von Triazacyclohexan und seinen Derivaten als Liganden bei der Herstellung metallorganischer Komplexe ist jedoch kaum verbreitet. Nur vereinzelt werden in der metallorganischen Literatur Komplexe mit diesen Liganden beschrieben, so beispielsweise in N.L. Armanasco, M.V. Baker, M.R. North, B.W. Skelton, A.H. White, J.Chem. Soc., Dalton Trans. (1997), 1363-1368; H. Schumann, Z. Naturforsch., Teil B50 (1995), 1038-1043; R.D. Köhn, et al. Angew. Chem. Int. Ed. Engl. 33 (1994), 1877-1878; J. Organomet. Chem. 501 (1995), 303-307; Chem. Ber. 129 (1996), 25-27; J. Organomet. Chem 520 (1996), 121-129; Inorg. Chem. 36 (1997), 6064-6069; Chem. Ber. 129 (1996), 1327-1333. Triazacyclohexankomplexe bei der Polymerisation von Olefinen waren jedoch bis vor kurzem unbekannt.

Auf dem 213. ACS National Meeting, 13. April - 17. April 1997 in San Francisco und dem 215. ACS National Meeting, 29. März - 2. April 1998 in Dallas, Texas, berichtete einer der Erfinder der vorliegenden Patentanmeldung über erste Versuche zur Polymerisation von Ethylen mit einem N,N,N-Trioctyl-triazacyclohexan-Chromkomplex mit Methylalumoxan als Aktivator. Über die Eignung des Katalysatorsystems zur Copolymerisation wurden keinerlei Aussagen gemacht, es wurde lediglich die Beobachtung mitgeteilt, daß der Kontakt des Katalysatorsystems mit 1-Hexen selektiv zur Trimerisierung führt.

In JP-A-10-231317 werden unter anderem symmetrisch substituierte Triazacyclohexanchromkomplexe mit Tris(pentafluorophenyl)boran und Aluminiumalkyl zur Herstellung von Polymeren und Oligomeren in Lösung oder Suspension verwendet. Die erhaltenen Polymere enthalten dabei oftmals größere Mengen an niedermolekularen Produkten und besitzen damit eine breite Molekulargewichtsverteilung. Über die Eignung des Katalysatorsystems zur Copolymerisation wurden keinerlei Aussagen gemacht.

Der vorliegenden Erfindung lag nun die Aufgabe zugrunde, ein Verfahren zur Copolymerisation von Ethylen oder Propylen miteinander oder mit anderen olefinisch ungesättigten Verbindungen, zu finden, welches auf einem Katalysatorsystem mit guter Polymerisationsaktivität beruht, wobei dieses Katalysatorsystem in einfacher und kostengünstiger Weise aus einfachen Ausgangsstoffen herstellbar ist.

Demgemäß wurde ein Verfahren zur Copolymerisation von Ethylen oder Propylen miteinander oder mit anderen olefinisch ungesättigten Verbindungen gefunden, welches dadurch gekennzeichnet ist, daß man die Polymerisation in Gegenwart eines Katalysatorsystems vornimmt, welches die folgenden Komponenten enthält:
A) einen Komplex eines Übergangsmetalles mit einem oder zwei substituierten oder unsubstituierten 1,3,5-Triazacyclohexan-Liganden oder entsprechenden Liganden, bei denen eines oder mehrere der Ringstickstoffatome durch Phosphor- oder Arsenatome ersetzt sind, und
B) gewünschtenfalls eine oder mehrere Aktivatorverbindungen.

Weiterhin wurde die Verwendung eines derartigen Komplexes eines Übergangsmetalls (A) bei der Copolymerisation von Ethylen oder Propylen miteinander oder mit anderen olefinisch ungesättigten Verbindungen gefunden.

Bestandteil der Erfindung ist auch ein Verfahren zur Copolymerisation von Ethylen oder Propylen miteinander oder mit anderen olefinisch ungesättigten Verbindungen bei Temperaturen von 20 bis 300°C und Drücken von 5 bis 4000 bar, welches dadurch gekennzeichnet ist, daß es die folgenden verfahrensschritte enthält:
(a) Kontaktieren eines Komplexes eines Übergangsmetalles mit einem oder zwei substituierten oder unsubstituierten 1,3,5-Triazacyclohexan-Liganden (A) mit mindestens einer Aktivatorverbindung (B),
(b) Kontaktieren des Reaktionsproduktes aus Schritt (a) mit den olefinisch ungesättigten Verbindungen unter Polymerisationsbedingungen.

Dabei kann Schritt b) nach Schritt a), aber auch gleichzeitig mit a) durchgeführt werden.

Eine Ausführungsform des erfindungsgemäßen Verfahrens ist dadurch gekennzeichnet, daß man als Komponente (A) eine Verbindung der allgemeinen Formel I 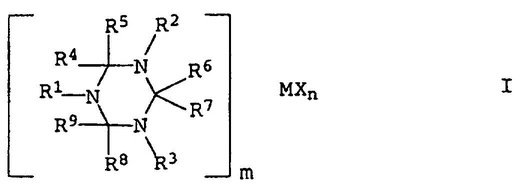 einsetzt, in welcher die Variablen die folgende Bedeutung haben:
- M: Ein Übergangsmetall der Gruppen 4 bis 12 des Periodensystems,
- R¹-R⁹: Wasserstoff oder Si- oder C-organische Substituenten mit 1 bis 30 C-Atomen, wobei zwei geminale oder vicinale Reste R¹ bis R⁹ auch zu einem fünf- oder sechsgliedrigen Ring verbunden sein können, wobei, wenn m gleich 2 ist, ein Rest R¹ bis R⁹ von jeweils einem Triazacyclohexanring zusammen mit einem dieser Substituenten des anderen Triazacyclohexanringes auch ein Brückenglied zwischen den beiden Ringen darstellen kann,
- X: Fluor, Chlor, Brom, Jod, Wasserstoff, C₁- bis C₁₀-Alkyl, C₆- bis C₁₅-Aryl oder Alkylaryl mit 1 bis 10 C-Atomen im Alkylrest und 6 bis 20 C-Atomen im Arylrest, Trifluoracetat, BF₄⁻, PF₆⁻ oder sperrige nichtkoordinierende Anionen,
- m: 1 oder 2,
- n: eine Zahl von 1 bis 4, welche der Oxidationsstufe des Übergangsmetalles M entspricht.

Als Übergangsmetalle M kommen dabei insbesondere die Elemente der Gruppe 4 bis 8 des Periodensystems und insbesondere die Elemente der Gruppe 6 des Periodensystems in Betracht. Besonders geeignet als Zentralatome der erfindungsgemäß eingesetzten Übergangsmetallkomplexe sind die Elemente Titan, Zirkonium, Hafnium, Vernadium, Chrom, Molybdän, Wolfram, Mangan, Eisen, Rhodium und Nickel. Besonders bevorzugt werden Übergangsmetallkomplexe des Chroms verwendet.

Durch die Variation der Substituenten am Triazacyclohexan-Ringsystem lassen sich verschiedene Eigenschaften des Katalysatorsystems beeinflussen. So läßt sich in der Regel durch die Einführung von Substituenten, insbesondere an den Stickstoffatomen des Ringsystems die Katalysatoraktivität steigern. Durch die Zahl und Art der Substituenten läßt sich weiterhin die Zugänglichkeit des Zentralatoms für die zu polymerisierenden Polyolefine beeinflussen. Auch dadurch läßt sich die Aktivität des Katalysators, die Selektivität hinsichtlich verschiedener Monomerer, insbesondere sterisch anspruchsvoller Monomerer, sowie das Molekulargewicht der entstehenden Polymerisate beeinflussen. Die chemische Struktur der Substituenten R¹ bis R⁹ kann daher in weiten Bereichen variiert werden, um die gewünschten Ergebnisse zu erzielen und ein maßgeschneidertes Katalysatorsystem zu erhalten. Als C-organische Substituenten kommen beispielsweise C₁ bis C₁₈-Alkyl, 5- bis 7-gliedriges Cycloalkyl, das seinerseits eine C₁₋ bis C₁₀-Arylgruppe als Substituent tragen kann, C₆- bis C₁₅-Aryl oder Arylalkyl, wobei gegebenenfalls auch zwei geminale oder vicinale benachbarte Reste R¹ bis R⁹ zu einem 5- oder 6-gliedrigen Ring verbunden sein können. Als Si-organische Substituenten kommen insbesondere Trialkylsilyl-Gruppen mit 1 bis 10 C-Atomen im Alkylrest in Betracht, insbesondere Trimethylsilyl-Gruppen. Enthält der Übergangsmetallkomplex nur einen Triazacyclohexan-Liganden, ist also m = 1, so kann einer der Substituenten R¹ bis R⁹ auch so ausgebildet sein, daß er eine über ein Brückenglied mit dem Ringsystem verbundene donor-funktionelle Gruppe trägt, die ihrerseits eine Koordinationsstelle des Metallatoms besetzt. Als solche donor-funktionellen Gruppen kommen insbesondere stickstoffhaltige Funktionen wie die Dialkylamino-Gruppe in Betracht. Trägt der Übergangsmetallkomplex zwei Triazacyclohexan-Liganden, ist m also gleich 2, so kann auch ein Rest R¹ bis R⁹ zusammen mit einem dieser Substituenten des anderen Triazacyclohexan-Ringes ein Brückenglied zwischen den beiden Ringen darstellen. Als Brückenglieder kommen alle Brückenglieder in Betracht, wie sie dem Fachmann beispielsweise von ähnlichen Metallocen-Komplexen bekannt sind, also insbesondere silyl- oder kohlenstoffhaltige Brückenglieder. Wie bei den Metallocen-Komplexen haben dabei verbrückte Komplexe mit verschiedenen Symetrien (z.B. Cₛ, C₂ᵥ) den Vorteil, daß sie zur Herstellung von syndiotaktischen oder Isotaktischen Polypropylen geeignet sind.

Insbesondere zur Herstellung von Polyethylen oder zur Herstellung von Copolymerisaten des Ethylens mit höheren ∝-Olefinen sind jedoch auch Triazacyclohexan-Liganden mit einfachen Substitutionsmustern vorteilhaft einsetzbar. So lassen sich beispielsweise mit Übergangsmetallkomplexen, welche nur einen Triazacyclohexan-Ring enthalten, welcher an den Stickstoffatomen mit einfachen C₁- bis C₁₂-Alkylresten substituiert ist, sehr gute Polymerisationsergebnisse erzielen. Als Alkylsubstituenten kommen dabei insbesondere Methyl-, Ehtyl-, Propyl-, Butyl-, Hexyl- und Octylreste in Betracht. Eine vorteilhafte Ausführungsform des erfindungsgemäßen Verfahrens ist demgemäß dadurch gekennzeichnet, daß R¹, R² und R³ C₁- bis C₁₂-Alkyl oder C₆- bis C₁₅-Aryl oder -Arylalkyl sind. Eine weitere vorteilhafte Ausführungsform des Verfahrens ist dadurch gekennzeichnet, daß die Substituenten R⁴, R⁵, R⁶, R⁷, R⁸ und R⁹ Wasserstoff oder C₁- bis C₄-Alkyl sind. Insbesondere kommen für R⁴, R⁵, R⁶, R⁷, R⁸ und R⁹ Wasserstoff oder Methyl-Gruppen in Betracht, da derartige Derivate besonders einfach als Kondensationsprodukt von Formaldehyd oder Acetaldehyd mit entsprechenden Aminen herstellbar sind.

Als Substituenten X kommen insbesondere die Halogene und darunter insbesondere Chlor in Betracht. Auch einfache Alkylreste, wie Methyl, Ethyl, Propyl oder Butyl, stellen vorteilhafte Liganden X dar. Als weitere Liganden X sollen nur exemplarisch und keineswegs abschließend Trifluoracetat, BF₄⁻, PF₆⁻ sowie nichtkoordinierende Anionen wie B(C₆F₅)₄⁻ genannt werden. Die Anzahl der Liganden X hängt von der Oxidationsstufe des Übergangsmetalles M ab. Die Zahl n kann somit nicht allgemein angegeben werden, sondern kann für jedes bestimmte Übergangsmetall unterschiedliche Werte annehmen. Diese Werte, d.h. die Oxidationsstufe der einzelnen Übergangsmetalle in katalytisch aktiven Komplexen, sind dem Fachmann bekannt. So weisen die entsprechenden Komplexe des Titans, des Zirkoniums und des Hafniums insbesondere die Oxidationsstufe +4 auf, Chrom, Molybdän und Wolfram liegen bevorzugt in der Oxidationsstufe +3 vor, wogegen Eisen und Nickel vorzugsweise in der Oxidationsstufe +2 eingesetzt werden.

Besonders viele Variationsmöglichkeiten zur Herstellung maßgeschneiderter Katalysatorsysteme sind denkbar, wenn das Substitutionsmuster der Komplexliganden unsymmetrisch ist. Bevorzugt sind daher auch Übergangsmetallkomplexe der allgemeinen Formel I, welche dadurch gekennzeichnet sind, daß mindestens einer der Reste R¹, R² oder R³ von den übrigen dieser Reste unterschiedlich ist. Solche unsymmetrisch substituierten Triazacyclohexankomplexe, bzw. die diesen Komplexen zugrunde liegenden Liganden können beispielsweise durch folgende Methoden hergestellt werden:
1) Durch Umsetzung eines Gemisches aus zwei primären Aminen (R¹NH₂ und R²NH₂) mit Formaldehyd (wässrige Lösung oder Paraformaldehyd), was zu einem Gemisch verschiedener Produkte führt, die wie folgt getrennt werden können:
   a) Destillation des Produktes bei ausreichend kleinen R¹ und R².
   b) Durchführung der Reaktion mit einem großen Überschuß an dem Amin R¹NH₂, wenn das symmetrische Reaktionsprodukt abdestillierbar ist. Nach Destillation verbleibt dann das unsymmetrische Produkt.
   c) Selektive Kristallisation eines Produktes.
   d) Komplexierung des Gemisches an CrCl₃ und Trennung der Komplexe durch Säulenchromatographie.
2) Durch Umsetzung von einem Amin R¹NH₂ mit einem Überschuß an Formaldehyd zu einem Gemisch aus symmetrisch substituiertem Produkt und dem entsprechenden 1-Oxa-3,5-diazacyclohexan. In einem zweiten Schritt kann das 1-Oxa-3,5-diazacyclohexan unter Normalbedingungen mit einem anderen Amin R²NH₂ (evtl. unter Säurekatalyse) unter Ersatz von Sauerstoff gegen R²N umgesetzt werden. Die Trennung des Produktgemischs kann wie unter 1) erfolgen: 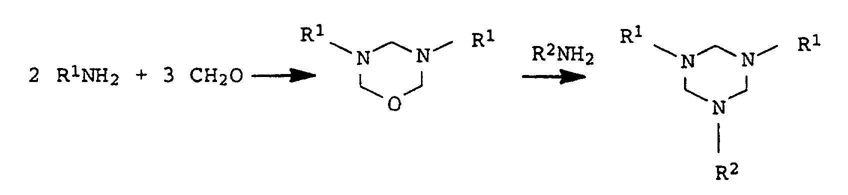
3) Durch Umsetzung eines symmetrischen Triazacyclohexans mit kleinem R¹ (Me oder Et) bei ca. 130°C mit einem anderen Amin R²NH₂. Bei dieser Temperatur entweicht R¹NH₂ und ein Gemisch der denkbaren unsymmetrischen Triazacyclohexane wird gebildet. Die Trennung erfolgt wie unter 1): 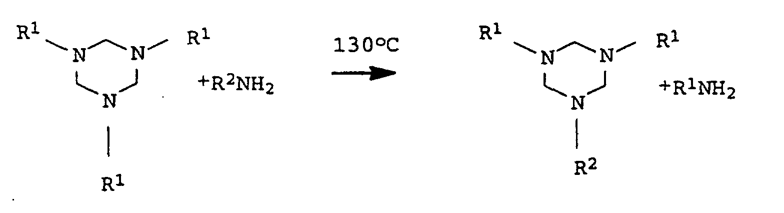
4) Durch Umsetzung zweier verschiedener symmetrischer Triazacyclohexane miteinander. In einer langsamen Reaktion kann ein Substituentenaustausch erfolgen. Die Produkte können wie unter 1) getrennt werden.

Durch diese Methoden lassen sich auch verbrückte Triazacyclohexane erhalten.

Durch die Verbrückung zweier Triazacyclohexanliganden lassen sich einerseits chirale Komplexe erhalten, die zur Herstellung von tatkischem Polypropylen vorteilhaft eingesetzt werden können. Andererseits wird durch die Brücke auch ein Öffnungswinkel am aktiven Zentrum des Katalysatorkomplexes vorgegeben, über welchen sich weitere Polymerisationseigenschaften einstellen lassen. Besonders bevorzugt sind daher auch Übergangsmetallkomplexe der allgemeinen Formel I, welche dadurch gekennzeichnet sind, daß m gleich 2 ist und ein Rest R¹ bis R⁹ von jeweils einem Triazacyclohexanring zusammen mit einem dieser Substituenten des anderen Triazacyclohexanrings ein Brückenglied zwischen den beiden Ringen darstellt.

Das erfindungsgemäße Verfahren zur Polymerisation von Olefinen läßt sich mit allen technisch bekannten Polymerisationsverfahren kombinieren. Die vorteilhaften Druck- und Temperaturbereiche zur Durchführung des Verfahrens hängen demgemäß stark von der Polymerisationsmethode ab. So lassen sich die erfindungsgemäß verwendeten Katalysatorsysteme in allen bekannten Polymerisationsverfahren, also beispielsweise in Hochdruck-Polymerisationsverfahren, in Rohrreaktoren oder Autoklaven, in Suspensions-Polymerisationsverfahren, in Lösungs-Polymerisationsverfahren oder bei der Gasphasenpolymerisation einsetzen. Bei den Hochdruck-Polymerisationsverfahren, die üblicherweise bei Drücken zwischen 1000 und 4000 bar, insbesondere zwischen 2000 und 3500 bar, durchgeführt werden, werden in der Regel auch hohe Polymerisationstemperaturen eingestellt. Vorteilhafte Temperaturbereiche für diese Hochdruck-Polymerisationsverfahren liegen zwischen 200 und 380°C, insbesondere zwischen 220 und 270°C. Bei Niederdruck-Polymerisationsverfahren wird in der Regel eine Temperatur eingestellt, die mindestens einige Grad unter der Erweichungstemperatur des Polymerisates liegt. Insbesondere werden in diesen Polymerisationsverfahren Temperaturen zwischen 50 und 180°C, vorzugsweise zwischen 70 und 120°C, eingestellt. Die Drücke liegen hierbei üblicherweise im Bereich von 1 bis 40 bar, bevorzugt zwischen 5 und 40 bar. Von den genannten Polymerisationsverfahren ist erfindungsgemäß die Gasphasenpolymerisation, insbesondere in Gasphasenwirbelschicht-Reaktoren, sowie die Suspensionspolymerisation, insbesondere in Schleifenreaktoren, besonders bevorzugt.

Nach dem erfindungsgemäßen Verfahren lassen sich verschiedene olefinisch ungesättigte Verbindungen polymerisieren. Im Gegensatz zu einigen bekannten Eisen- und Cobaltkomplexen zeigen die erfindungsgemäß eingesetzten Übergangsmetallkomplexe eine gute Polymerisationsaktivität auch mit höheren α-Olefinen und polaren Comonomeren, so daß ihre Eignung zur Copolymerisation besonders hervorzuheben ist. Als Olefine kommen dabei besonders Ethylen und α-Olefine mit 3 bis 8 Kohlenstoffatomen, aber auch Diene wie Butadien und polare Monomere wie Acrylsäureester und Vinylacetat in Betracht. Auch vinylaromatische Verbindungen wie Styrol lassen sich nach dem erfindungsgemäßen Verfahren polymerisieren.

Eine bevorzugte Ausführungsform des erfindungsgemäßen Verfahrens ist dadurch gekennzeichnet, daß man als Monomere Gemische von Ethylen mit C₃- bis C₈-∝-Olefinen wie z.B. Propen, 1-Buten, 1-Penten, 1-Hexen, 1-Hepten oder 1-Octen einsetzt.

Die als Komponente (A) bezeichneten Metallkomplexe sind für sich teilweise nicht polymerisationsaktiv und müssen dann mit einem Aktivator, der Komponente (B), in Kontakt gebracht werden, um Polymerisationsaktivität entfalten zu können. Als Aktivatorverbindungen kommen beispielsweise solche vom Alumoxantyp in Betracht, insbesondere Methylalumoxan. Alumoxane werden z.B. durch kontrollierte Addition von Wasser zu Alkylaluminiumverbindungen, insbesondere Trimethylaluminium, hergestellt. Als Co-Katalysator geeignete Alumoxan-Zubereitungen sind kommerziell erhältlich. Es wird angenommen,daß es sich hierbei um eine Mischung aus cyclischen und linearen Verbindungen handelt. Die Cyclischen Alumoxane können durch die Formel (R¹⁰AlO)ₖ und die linearen Alumoxane durch die Formel R¹⁰₂Al(R¹⁰AlO)ₖR¹⁰ zusammengefaßt werden, wobei k von 1 bis 50 sein kann. R¹⁰ ist bevorzugt ein C₁-C₆-Alkyl, wie z.B. Methyl, Ethyl, Butyl oder Isobutyl und besonders bevorzugt Methyl. Es können auch verschiedene R¹⁰ in einem Alumoxan enthalten sein. Vorteilhafte Alumoxane enthalten im wesentlichen Alumoxan-Oligomere mit einem Oligomerisationsgrad von etwa 5 bis 30.

Neben den Alumoxanen können als Aktivatorkomponenten auch solche eingesetzt werden, wie sie in der sogenannten kationischen Aktivierung der Metallocen-Komplexe Verwendung finden. Derartige Aktivatorkomponenten sind z.B. aus EP-B1-0468537 und aus EP-B1-0427697 bekannt. Insbesondere können als solche Aktivatorverbindungen (B) Borane oder Borate eingesetzt werden. Besonders bevorzugt werden Borane oder Borate eingesetzt, welche mindestens zwei substituierte Arylreste tragen. Als besonders geeignetes Borat ist Dimethylaniliumtetrakispentafluorphenylborat zu nennen, als besonders bevorzugtes Boran Trispentafluorphenylboran.

Weiterhin können als Aktivatorkomponente Verbindungen wie Aluminiumalkyle, insbesondere Aluminiumtrimethyl, Aluminiumtrifluorid oder Perchlorate eingesetzt werden. Die Aluminiumalkyle können gleichzeitig zum Abfangen von Wasser oder anderen Verunreinigungen verwendet werden.

Manchmal ist es wünschenswert eine Kombination von verschiedenen Aktivatoren zu verwenden. Dies ist z.B. bei den Metallocenen bekannt, bei denen Borane und Borate oft in Kombination mit einem Aluminiumalkyl eingesetzt werden. Generell ist auch eine Kombination von verschiedenen Aktivatorkomponenten mit dem erfindungsgemäßen Übergangsmetallkomplex möglich.

Die Menge der zu verwendenden Aktivatorverbindungen hängt von der Art des Aktivators ab. Generell kann das Molverhältnis Übergangsmetallkomplex (A) zu Aktivatorverbindung (B) von 1:0,1 bis 1:10000 betragen, bevorzugt werden 1:1 bis 1:1000. Das Molverhältnis von Übergangsmetallkomplex (A) zu Dimethylaniliniumtetrakispentafluorophenylborat liegt bevorzugt im Bereich von 1:1 bis 1:20 und besonders bevorzugt von 1:1 bis 1:15, zu Methylaluminoxan bevorzugt im Bereich von 1:1 bis 1:3000 und besonders bevorzugt von 1:10 bis 1:500. Durch die Menge der Aktivatorverbindung können außer der Aktivität des Katalysators auch Polymereigenschaften wie z.B. das Molgewicht gesteuert werden. Die optimale Menge variiert dementsprechend je nach gewünschter Aktivität/Polymereigenschaften in Abhängigkeit des jeweiligen Übergangsmetallkomplexes und kann durch einfaches Probieren bestimmt werden.

Der Übergangsmetallkomplex kann dabei entweder vor oder nach Kontaktierung mit den zu polymerisierenden Olefinen mit der oder den Aktivatorverbindungen in Kontakt gebracht werden. Auch eine Voraktivierung mit ein oder mehreren Aktivatorverbindungen vor der Durchmischung mit dem Olefin und weitere Zugabe der gleichen oder anderer Aktivatorverbindungen nach Kontaktierung dieses Gemisches mit dem Olefin ist möglich. Eine Voraktivierung erfolgt in der Regel bei Temperaturen zwischen 10-100°C, bevorzugt zwischen 20-80°C.

Auch kann mehr als einer der erfindungsgemäßen Übergangsmetallkomplexe gleichzeitig mit dem zu polymerisierenden Olefin in Kontakt gebracht werden. Dies hat den Vorteil, daß so ein weiterer Bereich an Polymeren erzeugt werden kann. Auf diese Weise können z.B. bimodale Produkte hergestellt werden.

Ein ebenfalls breites Produktspektrum kann durch Verwendung der erfindungsgemäßen Komplexe in Gegenwart eines für die Polymerisation von Olefinen üblichen Katalysator erreicht werden. Als Katalysatoren kommen hierbei besonders klassische Ziegler Natta Katalysatoren auf der Basis von Titan, klassische Phillips Katalysatoren auf der Basis von Chromoxiden, Metallocene (siehe z.B. Coville et al., J. Orgmet. Chem. 479 (1994) 1-29), die sogenannten constrained geometry Komplexe (siehe z.B. EP-A-416815 oder EP-A-420436), Nickel und Palladium Bisimin-Systeme (zu deren Darstellung siehe WO-A-98/03559), Eisen und Cobalt Pyridinbisimin-Verbindungen (zu deren Darstellung siehe WO-A-98/27124) oder Titan und Zirkon Schiffsche Baser komplexe (siehe z.B. EP-A-874 005) verwendet werden. So können auch durch derartige Kombinationen z.B. bimodale Produkte hergestellt oder in situ Comonomer erzeugt werden.

Die erfindungsgemäßen Übergangsmetallkomplexe (A) können optional auch auf einem organischen oder anorganischen Träger immobilisiert und in geträgerter Form in der Polymerisation verwendet werden. Dabei werden Katalysatoren zur Polymerisation von Olefinen erhalten, welche mindestens einen Übergangsmetallkomplex (A) und gewünschtenfalls ein oder mehrere Aktivatorverbindungen (B) und ein Trägermaterial enthalten. Dies ist eine gängige Methode, um Reaktorablagerungen zu vermeiden und die Polymermorphologie zu steuern. Als Trägermaterialien werden bevorzugt Kieselgel, Magnesiumchlorid, Aluminiumoxid, mesoporöse Materialien, Aluminosilikate und organische Polymere wie Polyethylen, Polypropylen oder Polystyrol und insbesondere Kieselgel oder Magnesiumchlorid verwendet. Das Trägermaterial kann vor der Kontaktierung mit dem Übergangsmetallkomplex oder der Aktivatorverbindung auch getrocknet oder calciniert werden.

Die Aktivatorverbindung(en) (B) und ein oder mehrere Übergangsmetallkomplexe (A) können mit dem Trägermaterial in verschiedenen Reihenfolgen oder gleichzeitig in Kontakt gebracht werden. Dies wird in der Regel in einem inerten Lösungsmittel durchgeführt, das nach der Immobilisierung abfiltriert oder verdampft werden kann. Auch die Verwendung des noch feuchten geträgerten Katalysators ist möglich. So kann zuerst die Mischung des Trägermaterials mit der oder den Aktivatorverbindungen (B) oder auch zuerst das Kontaktieren des Trägermaterials mit dem Übergangsmetallkomplex (A) erfolgen. Auch eine Voraktivierung des Übergangsmetallkomplexes (A) mit ein oder mehreren Aktivatorverbindungen (B) vor der Durchmischung mit dem Träger ist möglich. Bevorzugt wird eine Mischung des Übergangsmetallkomplexes (A) mit ein oder mehreren Aktivatorverbindungen (B) mit dem Trägermaterial gemischt und anschließend getrocknet. Die Menge an Metallkomplex (A) (in mmol) pro Gramm Trägermaterial kann stark variieren z.B. zwischen 0,001 bis 1 mmol/g. Die bevorzugt Menge an Metallkomplex (A) pro Gramm Trägermaterial liegt zwischen 0,001 und 0,5 mmol/g, und besonders bevorzugt zwischen 0,005 und 0,1 mmol/g. In einer möglichen Ausführungsform kann der Metallkomplex (A) auch in Anwesenheit des Trägermaterials hergestellt werden. Eine weitere Art der Immobilisierung ist auch die Vorpolymerisation des Katalysatorsystems mit oder ohne vorherige Trägerung.

Diese geträgerten Katalysatorsysteme lassen sich besonders gut in Verfahren zur Polymerisation oder Copolymerisation von Olefinen verwenden. Als Olefine kommen dabei neben Ethylen und α-Olefinen mit 3 bis 12 Kohlenstoffatomen auch interne Olefine und nichtkonjugierte und konjugierte Diene wie Butadien, 1,5-Hexadien oder 1,6-Heptadien, cyclische Olefine wie Cyclohexen , Cyclopenten oder Norbornen, polare Monomere wie Acrylsäureester, Acrolein, Acrylnitril, Vinylalkohol und Vinylacetat oder vinylaromatische Verbindungen wie Styrol in Betracht. Bevorzugt wird mindestens ein Olefin ausgewählt aus der Gruppe Ethen, Propen, 1-Buten, 1-Penten, 1-Hexen, 1-Hepten, 1-Octen und 1-Decen polymerisiert. Eine bevorzugte Ausführungsform des erfindungsgemäßen Verfahrens ist dadurch gekennzeichnet, daß man als Monomere Gemische von Ethylen oder Propylen miteinander oder mit C₄- bis C₁₂-α-Olefinen einsetzt.

Durch das erfindungsgemäßen Verfahren lassen sich Polymerisate und Copolymerisate von Olefinen über einen breiten Molekulargewichtsbereich darstellen.

Die Herstellung verschiedener Triazacyclohexan-Liganden ist seit langer Zeit bekannt. Den einfachsten Zugang stellt die Kondensationsreaktion von Aldehyden wie Formaldehyd mit entsprechend substituierten Aminen, insbesondere mit Alkylaminen, dar. Verschiedene Synthesewege für diese Komplexliganden werden z.B. in Beilstein, "Handbook of Organic Chemistry", 4th Ed., Vth Suppl. Series, Springer-Verlag, Berlin, Vol. 26 (1986) S. 3ff u. Ref.; R=Octyl: D. Jamois et al J. Polym. Sci., Polym. Chem. Ed. 329 (1993), 1941-1958; A.G. Giumanini, G. Verardo et al. J. Prakt. Chem. 327 (1985), 739-748, K. Bhatia, Exoon Chemical Patents inc., EP 620266 (1994); F. Seng, K. Ley, Bayer AG, DE 2431862 (1979); H.J. Ha, G.S. Nam, Korea Institute of Science and Technology, DE 4100856 (1991) und H. Möhrle, D. Schnödelbach, Pharmazie 30 (1975), 699-706. Die Metallkomplexe, insbesondere die Chromkomplexe, lassen sich auf einfache Weise erhalten, wenn man die entsprechenden Metallchloride oder Metallcarbonyle mit dem Liganden umsetzt.

Die folgenden Beispiele erläutern die Erfindung.

Die folgenden Abkürzungen und Meßmethoden wurden dabei verwendet:

Der Comonergehalt der Polymeren (%C₆) und deren Methylseitenkettengehalt pro 1000 C-Atome der Polymerkette (CH₃/1000) wurde durch IR Spectroskopie bestimmt.

Der η Wert wurde mit einem automatischen Ubbelohde Viskometer (Lauda PVS 1) mit Dekalin als Lösungsmittel bei 130 °C bestimmt (ISO1628 bei 130°C, 0,001 g/ml Decalin). Die Dichte wurde nach ISO 1183 bestimmt.

Die Bestimmung der Molmassenverteilungen und der daraus abgeleiteten Mittelwerte Mn, Mw und Mw/Mn erfolgte mittels Hochtemperatur-Gelpermeations-chromatographie in Anlehnung an DIN 55672 unter folgende Bedingungen: : Lösungsmittel: 1,2,4-Trichlorbenzol, Fluß: 1 ml/min, Temperatur: 140°C, Kalibrierung mit PE Standards.

### Abkürzungen:

- Tp: Polymerisationstemperatur
- Mw: Gewichtsmittel des Molekulargewichts
- Mn: Zahlenmittel des Molekulargewichts
- Q: Polydispersität (Verhältnis von Mw zu Mn)
- m.p.: Schmelztemperatur des Polymers
- η: Staudingerindex (Viskosität); Eta-Wert
- CH₃/1000: Anzahl der Methylseitenketten pro 1000 C-Atomen
- MAO: Methylalumoxan
- Am: Pentyl
- ^{t}Bu: tert. Butyl
- Bz: Benzyl
- Cy: Cyclohexyl
- Do: Dodexyl
- Me: Methyl
- Oc: Octyl
- Phet: 1-(S)-Phenylethyl
- iPr: iso-Propyl
- TAC: 1,3,5-Triazacyclohexan
- Tf: Triflat
- Xy: 1,3-Xylol-1,3-diyl

### Beispiel 1:

### Herstellung von 1,3,5-Trioctyl-1,3,5-triazacyclohexan (Oc₃TAC)

100 g (0,774 mmol) Octylamin wurden in kleinen Portionen zu einer auf 0°C gekühlten Suspension von 20,2 g (0,673 mmol) Paraformaldehyd in 500 ml Toluol gegeben und danach zum Sieden erhitzt, wobei das Paraformaldehyd in Lösung ging. Toluol und Wasser wurden abdestilliert. Der Rückstand wurde im Ölpumpenvakuum von flüchtigen Rückständen befreit und dann in 100 ml Methanol aufgenommen, über eine kurze Kieselgelsäule filtriert, und anschließend wurden alle flüchtigen Bestandteile im Ölpumpenvakuum entfernt. Das Produkt fiel als viskose klare Flüssigkeit in einer Ausbeute von 82,3 g (83 %) an.

### Herstellung von (Oc₃TAC)CrCl₃

In einem Kolben wurden 662 mg (1,768 mmol) CrCl₃(THF)₃ und 728 mg (1,855 mmol) Oc₃TAC vorgelegt. Dazu wurde 100 ml trockener Ether einkondensiert und die entstehende Suspension etwa eine halbe Stunde gerührt. Nach Filtration über eine Fritte wurde der Filterrückstand mit Ether gewaschen, bis das Filtrat keine grüne Färbung mehr zeigte. Das Produkt wurde gründlich im Vakuum getrocknet. Ausbeute: 885 mg (98 %).

### Beispiel 2:

### Herstellung von 1,3,5-Tripentyl-1,3,5-triazacyclohexan)(Am₃TAC)

4,35 g (49,9 mmol) n-Pentylamin wurden in kleinen Portionen zu einer auf 0°C gekühlten Suspension von 1,44 g (48 mmol) Paraformaldehyd in 50 ml Toluol gegeben und danach zum Sieden erhitzt, wobei das Paraformaldehyd in Lösung ging. Toluol und Wasser wurden abdestilliert. Der Rückstand wurde im Ölpumpenvakuum von flüchtigen Rückständen befreit und dann in 50 ml Methanol aufgenommen, über eine kurze Kieselgelsäule filtriert, und anschließend wurden alle flüchtigen Bestandteile im Ölpumpenvakuum entfernt. Das Produkt viel als viskose klare Flüssigkeit in einer Ausbeute von 4,47 g (15 mmol; 94 %) an.

### Herstellung von (Am₃TAC)CrCl₃

In einem Kolben wurden 532 mg (1,42 mmol) CrCl₃(THF)₃ und 458 mg (1,54 mmol) Am₃TAC vorgelegt. Dazu wurde 100 ml trockener Ether einkondensiert und die entstehende Suspension etwa eine halbe Stunde gerührt. Nach Filtration über eine Fritte wurde der Filterrückstand mit Ether gewaschen, bis das Filtrat keine grüne Färbung mehr zeigte. Das Produkt wurde gründlich im Vakuum getrocknet. Ausbeute: 557 mg (86 %).

### Beispiel 3:

### Polymerisationen:

In einem 1-1-Autoklaven wurden die entsprechende MAO-Menge (als 30 %ige Lösung in Toluol, Hersteller: Albemarle) und 400 ml Isobutan vorgelegt. Nach Aufpressen von Ethylen bei zu einem Druck von 40 bar und Temperieren auf 70°C wurden jeweils die entsprechende Katalysatormenge über eine Schleuse zugegeben. Nach 60 min wurden die Polymerisationen durch Entspannen abgebrochen.

Daten zu den Polymerisationsbedingungen und den Produkteigenschaften können aus der Tabelle 1 entnommen werden.

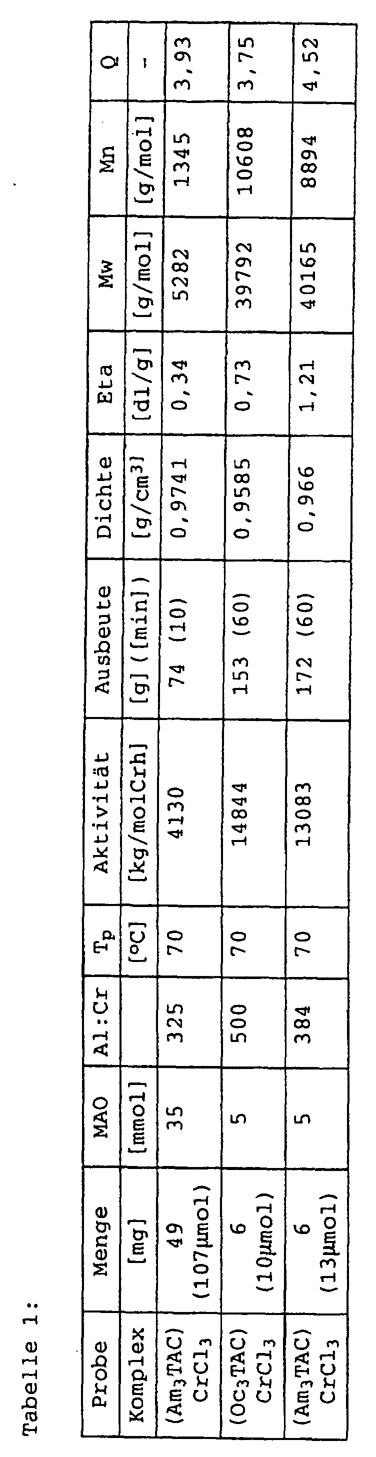

### Beispiel 4

### Herstellung von Me₂(Me₂NCH₂CH₂CH₂)TAC

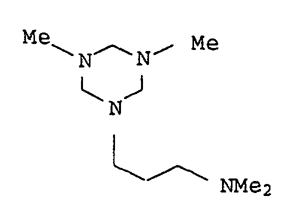

Zu einer Mischung von 50 ml Methylaminlösung in Wasser (40 %, 580 mmol) und 34 ml N,N-Dimethyl-trimethylen-diamin (276 mmol) wurden unter Eiskühlung 140 g Formaldehydlösung in Wasser (37 %, 1.73 mol) ggegeben. Innerhalb von 2 h wurden 250 g KOH zugegeben und noch 20 h gerührt. Die organische Phase wurde abgetrennt und die wässrige Phase mehrmals mit Et₂O extrahiert. Die vereinten organischen Phasen wurden mit Wasser gewaschen, eingeengt und bei ca. 10⁻² Torr fraktioniert destilliert. Bei 50-60°C wurde das rohe Produkt als farblose Flüssigkeit abdestilliert.
Ausbeute 9 g (16 %)
¹H NMR (CDCl₃, 80 MHZ): 3.03s (4H, MeNCH₂NR), 2.95s (2H, MeNCH₂NMe), 2.34t (J= 7.3 Hz, 2H, NCH₂), 2.08t (J= 7 Hz, 2H, CH₂NMe₂), 2.01s (6H, MeN), 1.98s (6H, NMe₂), 1.42m (2H, CCH₂C)

### Beispiel 5

### Herstellung von Me₂(HOCH₂CH₂)TAC

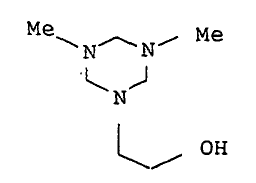

1 ml Ethanolamin (17 mmol) wurden in 80 ml Me₃TAC gelöst und 12 h lang auf 130°C erwärmt (Gasentwicklung). Nach Abdestillieren des überschüssigen Me₃TAC (60°C/ 0.01 Torr) wurden 2 g Rohprodukt erhalten. Es wurden 10 ml Methylamin (40 % in Wasser) zugegeben, 12 h lang gerührt und dann wieder im Vakuum entfernt. Der Rückstand wurde durch kurzes Erhitzen mit einem Bunsenbrenner im Vakuum umkondensiert.
Ausbeute: 1.2 g (46 %) eines farblosen Öls.
1H NMR (CDCl₃, 200 MHZ): 5.35br (1H, HO), 3.50t (2H, HOCH₂), 3.14br (6H, NCH₂N), 2.79t (2H, NCH₂), 1.97s (6H, NMe₂)

### Beispiel 6

Analog zu Beispiel 5 wurden aus 1 ml Ethanolamin (17 mmol) und 80 ml Et₃TAC 1.4 g ET₂(HOCH₂CH₂)TAC gewonnen:
¹H NMR (CDCl₃, 200 MHZ): 5.74br (1H, HO), 3.62t (2H, CH₂OH), 3.29br (6H, NCH₂N), 2.85t (2H, NCH₂CH₂OH), 2.24t (4H, NCH₂CH₃), 0.99q (4H, NCH₂CH₃),

### Beispiel 7

Herstellung von 1,3 Di-(1-methylen-3,5-diethyl-1,3,5-triazacyclohexyl)-benzol

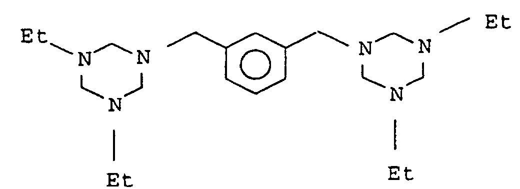

95 ml Ethylamin (70 % in Wasser, 1.13 mol) und 9 ml m-Xylylamin (0,07 mol) wurden in 150 ml Ethanol gelöst und unter kräftigem Rühren und Wasserkühlung 39 g Paraformaldehyd (1.3 mol) zugegeben. Als alles Paraformaldehyd gelöst und die Mischung auf 20°C abgekühlt war, wurden das Lösungsmittel und Et₃TAC bei 70°C/0.01 Torr abdestilliert. Die verbleibende farblose, viskose Flüssigkeit wurde mit dem Bunsenbrenner im Vakuum bis zu beginnendem Rauchen erhitzt. Nach Abkühlen wurde das Öl in 50 ml Ether gelöst und durch eine kurze Säule mit neutralem Aluminiumoxid filtriert. Zum Trocken wurde die Lösung mit etwas Natrium über Nacht gerührt, erneut durch Aluminiumoxid filtriert und im Vakuum das Lösungsmittel entfernt.
Ausbeute: 22 g (86 %)
¹H NMR (CDCl₃, 200 MHZ): 7.1-6.7 (4H, aromatische CH), 3.60t (4H, NCH₂), 3.29br (6H, NCH₂N), 2.42t (8H, NCH₂CH₃), 0.99q (12H, NCH₂CH₃)

### Beispiel 8

### Herstellung von 1,3-Di-(1-methylen-3,5-dimethyl-1,3,5-triazacyclohexyl)-benzol

Die Synthese erfolgte analog zu Beispiel 7
¹H NMR (CDCl₃, 200 MHZ): 7.4-6.9 (4H, aromatische CH), 3.67t (4H, NCH₂), 3.19br (6H, NCH₂N), 2.16s (12H, NMe₂)

### Beispiel 9

### Herstellung von 1,6-Di-(1-3,5-di-tert.-butyl-1,3,5-triazacyclohexyl)-hexan

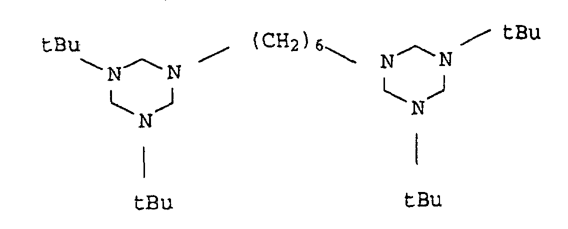

Zu 39 g ^{t}BuNH₂ (535 mmol) und 1.2 g 1,6-Diaminohexan (10 mmol) wurden unter Wasserkühlung 15 g Paraformaldehyd (500 mmol) gegeben. Nach 30 Minuten Rühren wurden 7.5 g KOH zugefügt und weitere 30 Minuten gerührt. Die organische Phase wurde abgenommen und bei 100°C/0,01 Torr ^{t}Bu₃TAC abdestilliert. Der Rückstand wurde in 10 ml Pentan aufgenommen, filtriert und die Lösung auf -78°C (Trockeneis) gekühlt. Der entstandene Niederschalg wurde abgetrennt, erneut mit 10 ml Pentan bei -78°C umkristallisiert und im Vakuum getrocknet.
Ausbeute 2.6 g (50 %) eines farblosen Feststoffs, Fp. 85-90°C
¹H NMR (CDCl₃, 200 MHz): 3.44 br (4H, ^{t}BuNCH₂N^{t}Bu), 3,33br (8H, ¹BuNCH₂NCH₂), 2.39t (4H, NCH₂), 1.2-1.3m (8H, CH₂), 0.98s (18H, tBu)

### Beispiel 10

### Herstellung von 1-Isopropyl-3,5-octyl-1,3,5-triazacyclohexan

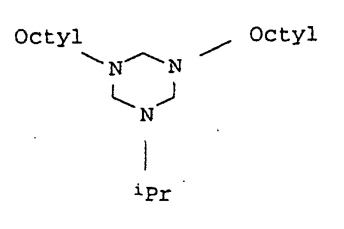

130g n-Octylamin (1.0 mol) wurden zu 120 g Formalin (37 % in Wasser) und 200 ml Methanol gegeben (Erwärmung) und 2h im Wasserbad gerührt. Nach Zugabe von 400 ml Hexan wurde die organische Phase abgetrennt, mit Wasser gewaschen und im Vakuum von Lösungsmittel befreit. Es wurden 150 g eines farblosen Öls erhalten, daß gemäß NMR aus einem Gemisch von Oc₃TAC und 1-3,5-Dioctyl-oxa-3,5-diazacyclohexan besteht.

2.2 g dieser Mischung wurden mit 0.8 g Isopropylamin und etwas p-Toluolsulfonsäure versetzt. Nach 2 Tagen wurde die Mischung mit wässriger KOH, dann mit Wasser gewaschen, in Pentan gelöst, durch Aluminiumoxid filtriert und im Vakuum das Lösungsmittel entfernt. Es verblieb ein Gemisch aus Oc₃TAC und ⁱPrOc₂TAC.

Eine Lösung des Gemisches in Toluol wurde mit Natrium getrocknet, filtriert, mit überschüssigem CrCl₃ und etwas Zink-Pulver versetzt und bis zum Siedepunkt erhitzt. Das CrCl₃ ging in Lösung (violett). Nach Abkühlen wurde erst mit CHCl₃, dann mit Aceton auf einer Kieselgel-Säule chromatographiert. Die getrennten violetten Banden von [Oc₃TACCrCl₃) und [ⁱPrOc₂TAC CrCl₃] wurden gesammelt und das Lösungsmittel entfernt.

### Beispiel 11

### Herstellung von 1,3,5-Trimethyl-1,3,5-triazalyclohexan

1,3,5-Trimethyl-1,3,5-triazycyclohexan (0.1 ml, 0.71 mmol) (getrocknet über Molsieb) wurde zu einer Lösung von (THF)₃ CrCl₃ (117 mg, 0.47 mmol) in 20 ml THF bei Raumtemperatur zugegeben. Nach 30 min. Rühren, wurde der violette Niederschlag abfiltriert und mit Diethylether gewaschen. Nach Trocknen im Vakuum wurde 122 mg (90 %) violettes Pulver erhalten (Schmelzpunkt 270°C (Zer.)).

### Beispiel 12

### Herstellung von 1,3,5-Tridodecyl-1,3,5-triazacyclohexan

103,5 g Dodecylamin (558 mmol) wurden in 200 ml Toluol gelöst und 16,75 g Paraformaldehyd (558 mmol) zugegeben. Nach 1 h Rühren wurde das Toluol/Wasser-Azeotrop abdestilliert bis ein Siedepunkt von 110°C erreicht war. Das restliche Toluol wurde am Rotationsverdampfer abdestilliert, der Rückstand in 1 1 Ethanol gelöst und auf -30°C gekühlt. Der entstandene farblose Feststoff wurde nach 2 h stehen bei -30°C gekühlt und der Feststoff nach Filtration mit dem ersten vereint. Nach Trocknen im Vakuum wurden 103g Do₃TAC (94 %) als farblose, viskose Flüssigkeit erhalten.
Schmelzpunkt 183°C
IR (KBr, v/cm⁻¹): 919m, 948m, 1020m, 1094m, 1114m, 1131m, 1157w, 1172w, 1216w, 1245w, 1261w, 1320w, 1327w, 1336w, 1360w, 1378w, 1396w, 1457m, 1469m, 2851s, 2872s, 2921s, 2954s UV/Vis (THF) in nm (ε in cm⁻¹ mol⁻¹l): 718 (680), 505 (1280), 338 (3390)
Magnetisches Moment nach Evans: 3.80 µ_{B}

### Herstellung von [1,3,5-Tridodecyl-1,3,5-triazacyclohexan]-chromtrichlorid

a) Zu 2,02 g [CrCl₃(THF)₃] (5,4 mmol) und 3,20 g DO₃TAC 5,4 mmol) wurden 40 ml Ether (über Na/Benzophenon) kondensiert und die Suspension 30 min. gerührt. Der violette Feststoff wurde durch Filtration abgetrennt und mit Ether gewaschen. Nach Trocknen im Vakuum wurden 3,65 g Produkt erhalten (90 %).
b) 40,4 g DO₃TAC (68 mmol) wurden in 500 ml Toluol gelöst. Nach Abdestillieren von einigen ml Toluol (Siedepunkt 110°C) und Abkühlen im Argonstrom wurden 11,4 g wasserfreies CrCl₃ (72 mmol) zugeben. Nach erneutem Abdestillieren von einigen ml Toluol und Abkühlen im Argonstrom wurden 1,0 g Zn-Pulver zugegeben. nach Abdestillieren des Toluols wurde violette, feste Rückstand mit Ether gewaschen und im Vakuum getrocknet. Der Rückstand wurde in Chloroform gelöst und über Kieselgel (200 ml) säulenchromatographisch gereinigt. Die mit Chloroform eluierbare violette Lösung wurde gesammelt und das Lösungsmittel im Vakuum entfernt. Es wurden 36,3 g (71 %) des violetten Komplexes erhalten.

### Beispiel 13

### Herstellung von [1,3,5-Tricyclohexyl-1,3,5-triazacyclohexan]-vanadiumtrichlorid

Zu 600 mg [VCl₃(THF)₃] (1,6 mmol) und 590 mg Cyclohexyl₃TAC (1.8 mmol) wurden 10 ml THF (über NA/Benzophenon) kondensiert und die Suspension 60 min. gerührt. Der violette Feststoff wurde durch Filtration abgetrennt und mit 2 ml THF gewaschen. Nach Trocknen im Vakuum wurden 0,65 g Produkt erhalten (80 %). Schmelzpunkt 240 - 241°C.
¹H NMR (200 MHz, CD₃NO₂/CDCl₃(1:2))): δ 32.4 (3H, Δν_{1/2} 80 Hz), 2.82 (6H, Δν_{1/2} 37 Hz), 2.08 (6H, Δν_{1/2} 70 Hz), 1.07 (3H, Δν_{1/2} 15 Hz), 0.98 (3H, Δν_{1/2} 21 Hz), 0.92 (6H, Δν_{1/2} 14 Hz), -0.07 (6H, Δν_{1/2} 17 Hz), -3.66 (3H, Δν_{1/2} 180 Hz), -4.16 (3H, Δν_{1/2} 82 Hz)
IR (KBr, v/cm⁻¹): 442m, 518w, 540s, 841m, 896m, 918s, 948s, 974s, 988s, 1017s, 1032s, 1042m, 1053s, 1068s, 1078sm, 1095s, 1120s, 1152m, 1171s, 1193m, 1199s, 1211m, 1257m, 1277m, 1312m, 1337m, 1351m, 1380s, 1395m, 1408m, 1447s, 1452s, 1465s, 1485m, 2853s, 2929s, 2964s, 2991m
Reflectance-UV/vis (KBr-Preßling) in nm: 853, 546, 408

### Beispiel 14

### Herstellung von [1,3,5-Trioctyl-1,3,5-triazacyclohexan]-chromtristriflat

Zu 1,1 g [(Octyl₃TAC)CrCl₃](1,9 mmol) wurden 10 ml Trifluormethansulfonsäure (TfOH) kondensiert. Während des Auftauens löste sich der Komplex mit türkiser Farbe in der Säure unter Gasentwicklung (HCI). Das Gas wurde kontinuierlich im Vakuum bei Raumtemperatur abdestilliert. Nach Waschen mit Ether und Trocknen im Vakuum wurden 1,2 g (70 %) des türkisfarbenen Produktes erhalten.

### Beispiel 15

### Herstellung von 1-Benzyl-3,5-dimethyl-1,3,5-triazacyclohexan

9 ml Benzylamin (82 mmol) und 100 ml Methylamin (40%-ig in Wasser, 1.2 mol) wurden in 500 ml Ethanol gelöst und 40 g Paraformaldehyd (1,33 mol) zugegeben und gerührt. Nach Auflösen des Paraformaldehyd und Abkühlen auf Raumtemperatur wurde das Lösungsmittel am Rotationsverdampfer entfernt und der Rückstand bei 80 - 90°C/1,3 Pa destilliert. Das Destillat wurde in Pentan gelöst und mit Natrium 48 h lang gerührt. Nach Filtration und Entfernen des Lösungsmittels im Vakuum verbleiben 5 g (30 %) eines farblosen Öls.
MS (70 eV, 80°C): 205 (M⁺, 34 %), 204 /-H)⁺, 23 %), 162 ((M- (H₂C=NMe))⁺, 58 %)
¹H NMR (200 MHz, CDCl₃): δ 7.3-7.1 (5H, Ph), 3.7s (2H, CH₂Ph), 3.2br (6H, Ring-CH₂), 2.2s (6H, Me)
¹³C-NMR (50 MHz, CDCl₃: δ 139.6, 128.4, 128.0, 126.7 (Ph), 78.3, 74.7 (Ring-CH₂), 56.6 (CH₂Ph), 39.9 (Me)
IR (KBr, v/cm⁻¹): 461m, 481m, 699m, 743m, 836m, 862s, 917m, 982s, 1003m, 1009m, 1028m, 1050s, 1062s, 1076s, 1114m, 1144m, 1195s, 1234m, 1263w, 1311w, 1361m, 1384m, 1396s, 1418s, 1427s, 1453w, 1469m, 1495s, 1585s, 1605s, 1682s, 2601s, 2627s, 2642s, 2684s, 2726s, 2790w, 2838s, 2852s, 2939w, 2965m, 3027s, 3061s

### Herstellung von [1-Benzyl-3,5-dimethyl-1,3,5-triazacyclohexan]chromtrichlorid

1,0 g (Benzyl)Me₂TAC (4,9 mmol) und 1,8 g CrCl₃(THF)₃ (4,8 mmol) wurden in 20 ml Diethylether gerührt. Nach 30 min. wurde das Lösungsmittel im Vakuum entfernt, dreimal erneut Ether zugegeben und im Vakuum entfernt, dann mit Ether gewaschen und im Vakuum getrocknet. Es wurden 1,2 g violettes [((Benzyl)Me₂TAC)CrCl₃] 68 %) erhalten, Schmelzpunkt 244 - 246°C.
MS (70 eV, 200°C): 290 ((M-2(HCI))⁺, 1 %)
Elementaranalyse (ber.): C 38.8 (39.6), H 5.7 (5.3), N 10.9 (11.6), Cl 28.7 (29.3)
IR (KBr, v/cm⁻¹): 413m, 422m, 470m, 512s, 558m, 660m, 708m, 769m, 884m, 888m, 892m, 897m, 924w, 944w, 962m, 971m, 1009w, 1028m, 1070m, 1103w, 1118w, 1139m, 1164w, 1186m, 1205m, 1259w, 1278w, 1304m, 1341m, 1366s, 1384s, 1424m, 1453m, 1465w, 1480s, 1496s, 1584s, 1640s, 1685s, 2795m, 2876m, 2929s, 2980s, 3005s, 3029s, 3061m, 3086m, 3106m

### Beispiel 16

### Herstellung von 1,3-Dimethyl-5-octyl-1,3,5-triazacyclohexan

9 ml Octylamin (55 mmol) und 100 ml Methylamin (40 %-ig) in Wasser, 1.2 mol) wurden in 500 ml Ethanol gelöst und 40 g Paraformaldehyd (1.33 mol) zugegeben und gerührt. Nach Auflösen des Paraformaldehyd und Abkühlen auf Raumtemperatur wurde das Lösungsmittel am Rotationsverdampfer entfernt und der Rückstand bei 90°C/1.3 Pa destilliert. Das Destillat wurde in Pentan gelöst und mit Natrium 48 h lang gerührt. Nach Filtration und Entfernen des Lösungsmittels im Vakuum verblieben 8 g (65 %) eines farblosen Öls.
MS (70 eV, 23°C): 226 ((M-H)⁺, 4 %) 184 ((M-H₂C=nMe))⁺, 10 %)
¹H NMR (200 MHz, CDCl₃): δ 3.2br (6H, Ring-CH₂), 2.5t (2H, N-CH₂C₇H₁₅), 2.2s (6H, Me), 1.2-1.4 (12H, N-CH₂C₆H₁₂Me), 0.8t (3H, N-CH₂C₆H₁₂Me)
¹³C-NMR (50 MHz, CDCl₃: δ 78.3, 75.2 (Ring-CH₂), 52.5 (N-CH₂C₇H₁₅), 40.0 (Me), 31.6, 29.3, 29.1, 27.8, 27.2, 22.5, 13.9 (N-CH₂C₇H₁₅)
IR (KBr, v/cm⁻¹): 724m, 834m, 860m, 864m, 915m, 981w, 1003s, 1026m, 1049m, 1116s, 1147s, 1234m, 1262s, 1370m, 1385m, 1426w, 1444w, 1467m, 2596m, 2626m, 2726s, 2786s, 3854s, 2927s, 2953s

### Herstellung von [1,3-Dimethyl-5-octyl-1,3,5-triazacyclohexan]chromtrichlorid

1,5 g (Octyl)Me₂TAC (6.6 mmol) und 2,4 g CrCl₃(THF)₃ (6.4 mmol) wurden in 20 ml Diethylether gerührt. Nach 30 min. wurde das Lösungsmittel im Vakuum entfernt, dreimal erneut Ether zugegeben und im Vakuum entfernt, dann mit Ether gewaschen und im Vakuum getrocknet. Es wurden 2,1 g violettes [((Octyl)Me₂TAC(CrCl₃] (82 %) erhalten, Schmelzpunkt 187°C.
MS (70 eV, 200°C): 312 ((M-2(HCI))⁺, 1 %)
daneben etwas 410 ((M'-2(HCI))⁺) von [((Octyl)₂MeTAC)CrCl₃] Elementaranalyse (ber.): C 41.3 (40.5), H 7.7 (7.6), N 10.7 (10.9), Cl 25.5 (27.6)
berechnet für Gemisch mit 8 % [((Octyl)₂MeTAC)CrCl₃]: C 41.4, H 7.7, N 10.7, Cl 27.0
IR (KBr, v/cm⁻¹): 420m, 512w, 531s, 535s, 539s, 543s, 724s, 925w, 1006w, 1083w, 1116w, 1168m, 1236s, 1257m, 1281s, 1378s, 1418s, 1469m, 1642s, 1687s, 2855s, 2927m, 2956s

### Beispiel 17

### Herstellung von [1,3,5-Tri(S-1-Phenylethyl)-1,3,5-triazacyclohexan]chromtrichlorid

540 g [CrCl₃(THF)₃] 1.45 mmol) und 550 mg (S-Phet)₃TAC (1.38 mmol) wurden in 20 ml THF 7 Tage lang gerührt bis eine ein Probe der Suspension in Wasser eine farblose Lösung mit violettem Niederschlag ergab. Nach Zugabe von 60 ml Wasser wurde der violette Feststoff durch Filtration abgetrennt und mehrmals mit Ether gewaschen. Nach Trocknen im Vakuum (40°C, 2 h) wurden 680 mg Produkt erhalten (90 %).
Schmelzpunkt 313°C (langsame Zersetzung ab 250°C)
Spezifische Drehung in CH₂Cl₂ (c = 0.2 g/100 ml) : [α]_{D}²⁰ = -286°
IR (KBr, v/cm⁻¹): 473m, 480m, 507m, 533m, 564s, 583m, 618m, 652m, 658m, 670m, 704s, 710s, 753s, 769m, 780s, 833m, 854m, 890m, 931s, 974s, 996s, 1009s, 1027s, 1032s, 1042s, 1055s, 1080s, 1105s, 1158s, 1168s, 1193m, 1204s, 1212s, 1231m, 1257s, 1310m, 1356m, 1366m, 1386s, 1394m, 1403m, 1453s, 1477m, 1497s, 1583m, 1602m, 1617m, 1899, 1974m, 1995m, 1865s, 2937s, 2979s, 3005m, 3028m, 3036m, 3062m
UV/Vis (THF) in nm (ε in cm⁻¹mol⁻¹l): 739 (140), 526 (280), 342 (23)

### Beispiel1 18 bis 38

### Durchführung der Polymerisationsversuchen

Die Polymerisationsversuche wurden unter Argon mit jeweils zwischen 5 bis 20 µmol der Komplexe (siehe Tabelle 2) in 250 ml absolutem Toluol bei 40°C durchgeführt.

Bei den Aktivierungsversuchen mit MAO wurde jeweils die angegebene Menge des 1,6 molaren MAO in Toluol gemäß Tabelle 2 zugegeben. Bei der Aktivierung mit Borat wurde die entsprechende Menge an DMAB (Dimethylaniliniumtetrakis(pentafluorophenyl)borat) zugegeben, auf 70°C erhitzt und anschließend mit Tibal (Triisobutylaluminium) gemäß Tabelle 2 versetzt. Die Lösung wurde wieder auf 40°C abgekühlt. Dann wurde ca. 20 bis 40 l/h Ethylen für eine Stunde durchgeleitet (bei Atmosphärendruck). Bei den Copolymerisationsversuchen wurde vor dem Ethylendurchleiten 5 ml Hexen vorgelegt, dann Ethylen durchgeleitet und die Restmenge an Hexen innerhalb von 15 min. über einen Tropftrichter zudosiert. Bei Verwendung von Buten wurde zusammen mit dem Ethylen ca. 10 bis 20 l/h Buten durchgeleitet.

Die Reaktion wurde durch Zugabe eines Gemisches aus 15 ml konzentrierter Salzsäure und 50 ml Methanol abgestoppt und 15 min. nachgerührt. Nach Zugabe von 250 ml Methanol wurde abfiltriert, mit Methanol gewaschen und bei 70°C getrocknet. In Tabelle 2 sind Polymerisations- bzw. die Produktdaten zusammengefaßt.

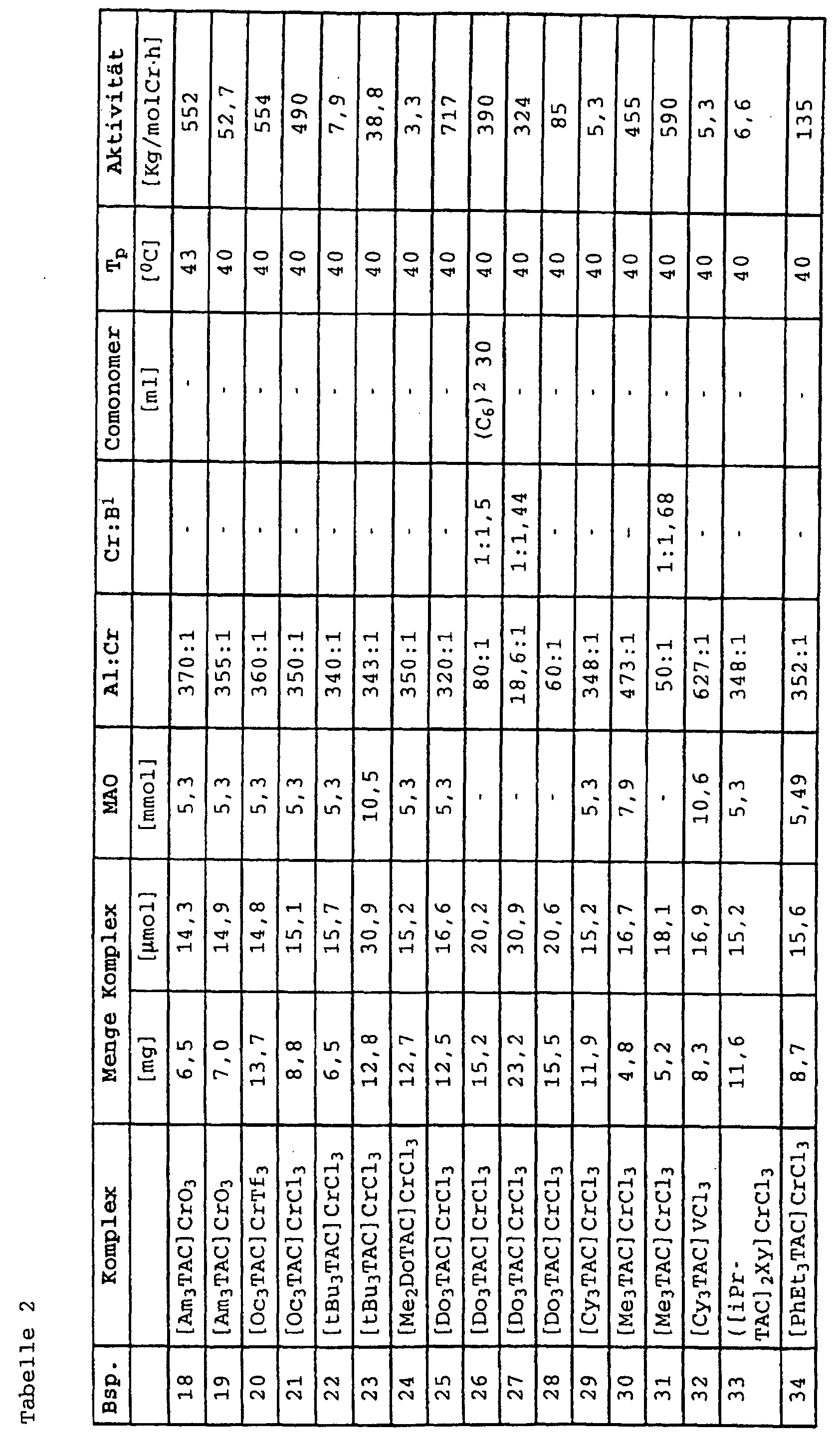

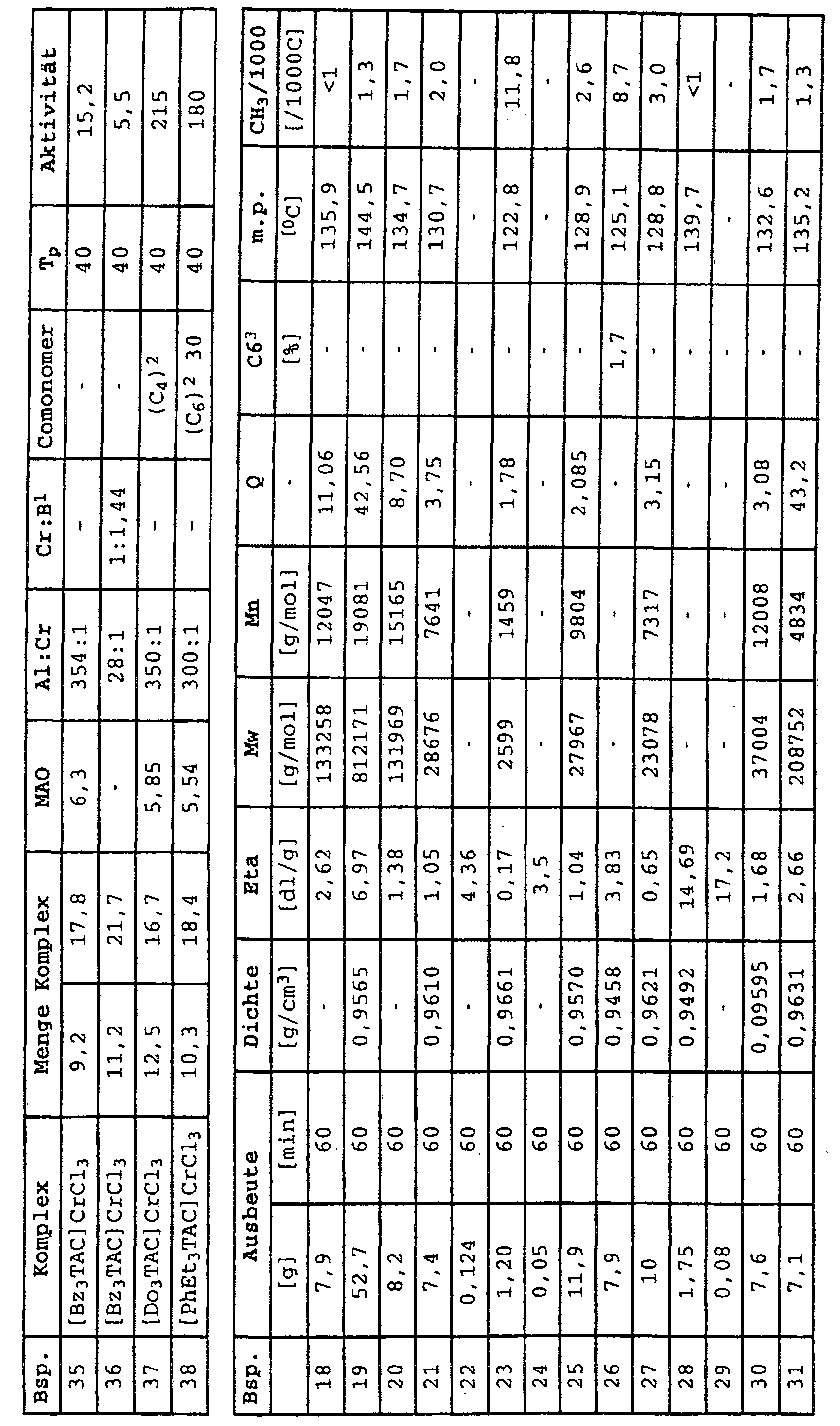

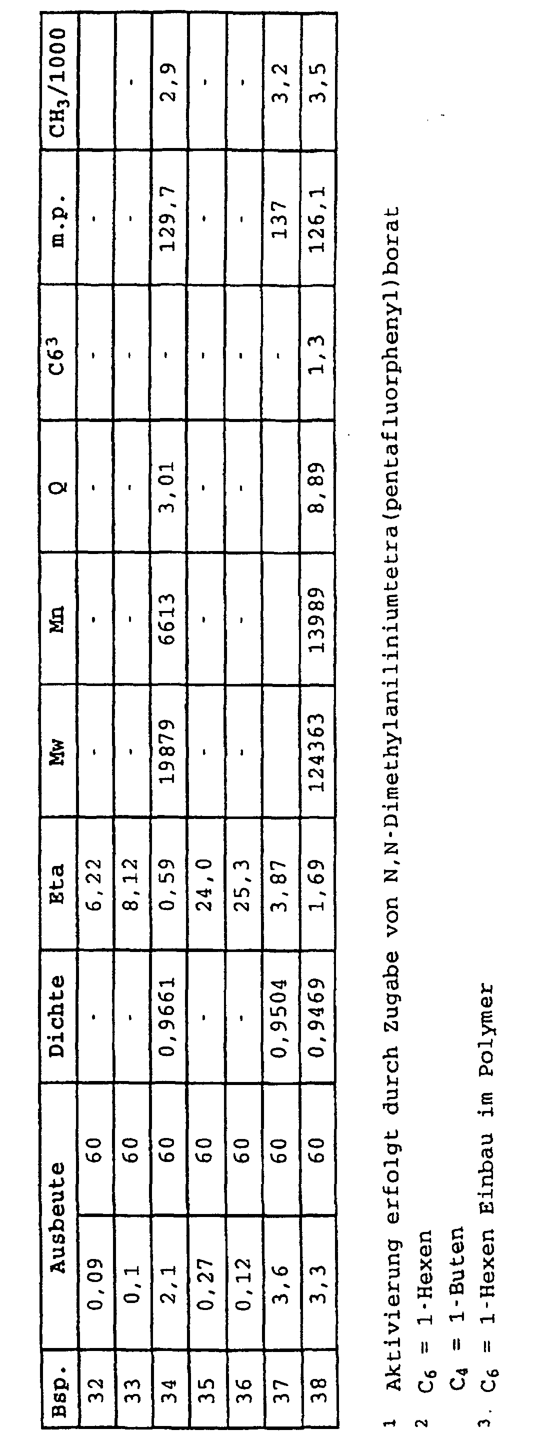

### Beispiele 39 bis 45

Die Polymerisationen wurden in einem mit Kontaktthermometer, Rührer mit Teflonblatt, Heizpilz und Gaseinleitungsrohr versehenen 11-Vierhalskolben durchgeführt. Unter Argon wurde jeweils zwischen 10 und 20 µm (Do₃TAC)CrCl₃ in 250 ml absolutem Toluol bei 40°C vorgelegt. Dann wurde die in Tabelle 3 angegebene Menge an Dimethylanilium-tetrakis(pentafluorophenyl)borat zugegeben, auf 70°C erhitzt und anschließend mit Tibal (Triisobutylaluminium) im Verhältnis Cr : Al = 1 : 50 versetzt. Die Lösung wurde wieder auf 40°C abgekühlt und anschließend ca. 20 bis 40 l/h Ethylen für 20 bis 60 Minuten durchgeleitet.

Die Reaktion wurde durch Zugabe eines Gemisches aus 15 ml konzentrierter Salzsäure und 50 ml Methanol abgestoppt und 15 min nachgerührt. Dann wurden 250 ml Methanol zugegeben, weitere 15 min gerührt, abfiltriert, mit Methanol gewaschen und bei 70°C getrocknet. In der Tabelle 3 sind die Polymerisations- bzw. Produktdaten zusammengefasst.

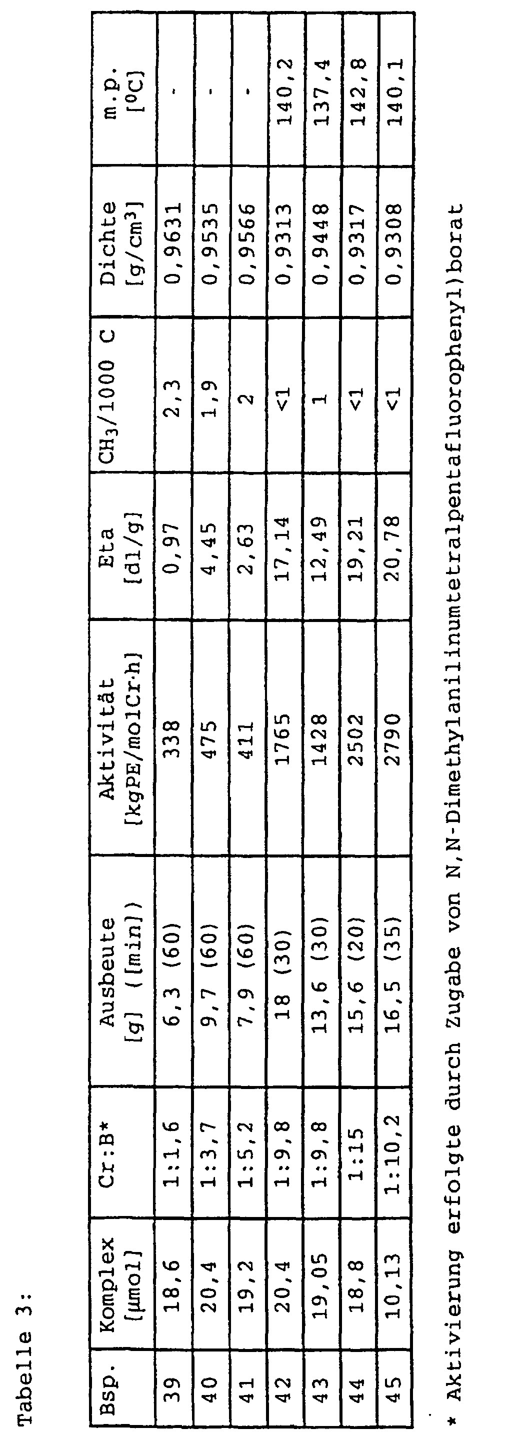

### Beispiel 46

### Trägerung auf Polystyrol

Polystyrol (102 g) wurde in 700 ml Toluol suspendiert und 5 h bei Raumtemperatur gerührt. Danach wurde das Polystyrol abfiltriert und einen Tag mit 800 ml Diethylether gerührt. Das Polystyrol wurde erneut abfiltriert und anschließend in 800 ml Methanol suspendiert. Nach erneuter Filtration wurde nochmals mit 800 ml Methanol suspendiert und erneut abfiltriert. Das so erhaltene Polystyrol wurde im Vakuum getrocknet. So konnten in der Regel gereinigtes Polystyrol in ca. 90 Gew.% Ausbeute erhalten werden.

Zu einer Mischung aus 863 mg (Do₃TAC)CrCl₃, 50,1 ml Methylalumoxan (30 Gew.-% in Toluol) (Al:Cr = 200:1) und 5 ml Toluol wurden 11,5 g Polystyrolträgermaterial zugegeben und 3 Stunden bei Raumtemperatur gerührt. Nach Trocknen im Vakuum wurden 27,4 g geträgerter Katalysator mit einer Beladung von 100 µmol/g Träger erhalten.

### Beispiele 47 bis 51

Die Polymerisationen wurden in einem 101-Rührautoklaven durchgeführt. Unter Stickstoff wurde bei Raumtemperatur 100 mg Tibal (Triisobutylaluminium) in den Autoklaven gegeben, dann wurden 4 1 Isobutan zudosiert. Zur Copolymerisation von Buten wurde zusätzlich noch 400 ml Buten einkondensiert. Danach wurde unter Rühren auf 70°C erwärmt und anschließend die in Tabelle 4 angegebene Einwaage des geträgerten Katalysators mit einem Ethylenüberdruck eingepresst. Dann wurde der Reaktordruck mit Ethylen auf einen Enddruck von 40 bar erhöht und die Polymerisation eine Stunde weitergeführt.

Die Reaktion wurde durch Entspannen des Reaktors beendet und die Produkte ausgetragen. In der Tabelle 4 sind die Polymerisations- bzw. Produktdaten zusammengefasst.

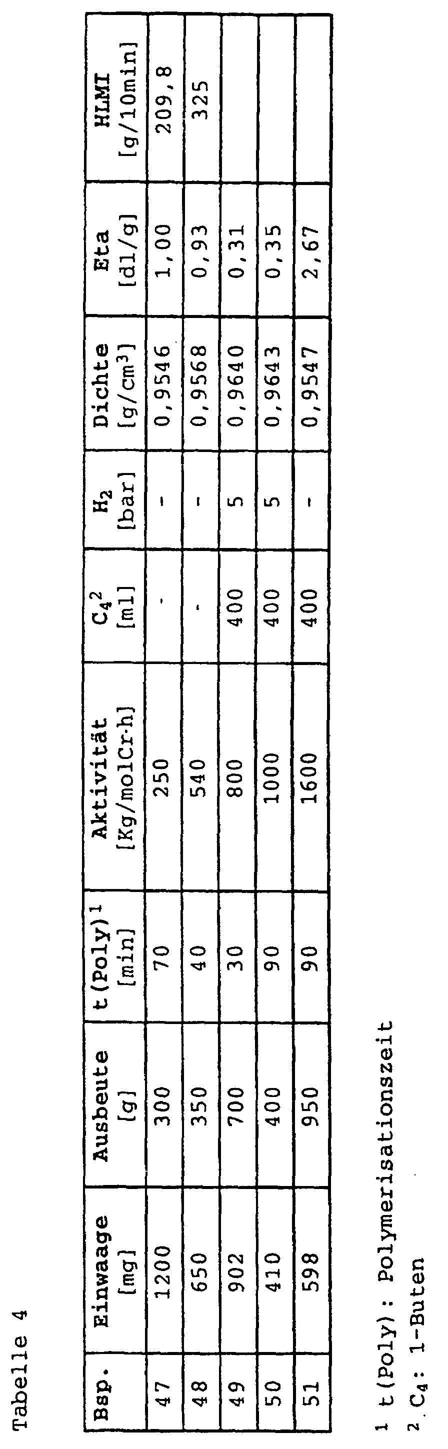

### Beispiel 52

### Trägerung auf Kieselgel

Als Kieselgel wurde ES70X der Firma Crossfield verwendet.

### Beispiel 52

Zu 375 mg (Do₃TAC)CrCl₃ (0,5 mmol) gelöst in 21,76 ml Toluol wurden 32,3 ml MAO (1,55 M in Toluol) (50 mmol) gegeben und 15 Minuten bei Raumtemperatur gerührt. Dann wurden 5 g Kieselgel (600°C calciniert) zum Reaktionsgemisch zugegebenund die so erhaltene Suspension 6 Stunden bei Raumtemperatur gerührt. Dann wurde über Nacht ruhen gelassen, der Feststoff anschließend abfiltriert und anschließend zweimal mit Heptan gewaschen. Der so isolierte Feststoff wurde im Vakuum getrocknet. Ausbeute 8,2 g geträgerter Katalysator.

### Beispiel 53 und 54

Die Polymerisationen wurden in einem 101-Rührautoklaven durchgeführt. Unter Stickstoff wurde bei Raumtemperatur Tibal (Triisobutylaluminium) in den Autoklaven gegeben, dann wurden 4 1 Isobutan einkondensiert und gegebenenfalls 100 ml Hexen zugegeben. Danach wurde unter Rühren auf 70°C erwärmt und anschließend die in Tabelle 4 angegebene Einwaage des geträgerten Katalysators aus Beispiel 52 mit einem Ethylenüberdruck eingepresst. Dann wurde der Reaktordruck mit Ethylen auf einen Enddruck von 40 bar erhöht und die Polymerisation 90 Minuten weitergeführt.

Die Reaktion wurde durch Entspannen des Reaktors beendet und die Produkte ausgetragen. In der Tabelle 5 sind die Polymerisations- bzw. Produktdaten zusammengefasst.

### Beispiel 55

Zu 375 mg (Do₃TAC)CrCl₃ (0,5 mmol) gelöst in 300 ml Toluol wurden 808 mg Dimethylaniliniumtetrakis(pentafluorophenyl)borat (1 mmol) gegeben und auf 75°C erwärmt. Nach Abkühlen auf Raumtemperatur wurden 5 g Kieselgel (600°C calciniert) zum Reaktionsgemisch zugegeben. Dann wurde die Suspension eine Stunde bei Raumtemperatur gerührt und anschließend das Lösungsmittel im Vakuum entfernt. Ausbeute 6,5 g geträgerter Katalysator (5% Resttoluol).

Die Polymerisationen wurden in einem 11-Rührautoklaven durchgeführt. Unter Stickstoff wurde bei Raumtemperatur die in Tabelle 5 angegebene Menge TEAL (Triethylaluminium) in den Autoklaven gegeben, dann wurden 400 ml Isobutan zudosiert. Danach wurde unter Rühren auf 70°C erwärmt und anschließend die in Tabelle 5 angegebene Einwaage des geträgerten Katalysators aus Bsp. 55 mit einem Ethylenüberdruck eingepresst. Dann wurde der Reaktordruck mit Ethylen auf einen Enddruck von 40 bar erhöht und die Polymerisation eine Stunde weitergeführt.

Die Reaktion wurde durch Entspannen des Reaktors beendet und die Produkte ausgetragen. In der Tabelle 5 sind die Polymerisations- bzw. Produktdaten zusammengefasst.

### Beispiel 56

Zu 675 mg (Do₃TAC)CrCl₃ (0,9 mmol) gelöst in 50 ml Toluol wurden 1454 mg Dimethylaniliniumtetrakis(pentafluorophenyl)borat (1,8 mmol) gegeben und auf 80°C erwärmt. Nach Abkühlen auf 50°C wurden 6 g Kieselgel (600°C calciniert) zum Reaktionsgemisch zugegeben. Dann wurde die Suspension 30 Minuten bei 80°C gerührt und anschließend das Lösungsmittel im Vakuum entfernt. Ausbeute 7,6 g geträgerter Katalysator.

Die Polymerisation wurde wie in Beispiel 55 unter Verwendung des geträgerten Katalysators aus Beispiel 56 durchgeführt. Polymerisationsbedingungen und Produktdaten können aus Tabelle 5 entnommen werden.

### Beispiel 57

Zu 225 mg (Do₃TAC)CrCl₃ (0,3 mmol) gelöst in 50 ml Toluol wurden 485 mg Dimethylaniliniumtetrakis(pentafluorophenyl)borat (0,6 mmol) gegeben und auf 75°C erwärmt. Nach Abkühlen auf Raumtemperatur wurden 6 g Kieselgel (600°C calciniert) zum Reaktionsgemisch zugegeben. Dann wurde die Suspension eine Stunde bei Raumtemperatur gerührt, dann 2 Stunden ruhen gelassen und anschließend das Lösungsmittel im Vakuum entfernt. Ausbeute 6,8 g geträgerter Katalysator.

Die Polymerisation wurde wie in Beispiel 55 unter Verwendung des geträgerten Katalysators aus Beispiel 57 durchgeführt. Polymerisationsbedingungen und Produktdaten können aus Tabelle 5 entnommen werden.

### Beispiel 58

Zu 450 mg (Do₃TAC)CrCl₃ (0,6 mmol) gelöst in 50 ml Toluol wurden 970 mg Dimethylaniliniumtetrakis(pentafluorophenyl)borat (1,2 mmol) gegeben und auf 75°C erwärmt. Nach Abkühlen auf Raumtemperatur wurden 6 g Kieselgel (welches 6h bei 130°C im Vakuum erhitzt worden war) zum Reaktionsgemisch zugegeben. Dann wurde die Suspension eine Stunde bei Raumtemperatur gerührt, dann 2 Stunden ruhen gelassen und anschließend das Lösungsmittel im Vakuum entfernt. Ausbeute 7,2 g geträgerter Katalysator.

Die Polymerisation wurde wie in Beispiel 55 unter Verwendung des geträgerten Katalysators aus Beispiel 58 durchgeführt. Polymerisationsbedingungen und Produktdaten können aus Tabelle 5 entnommen werden.

### Beispiel 59

Zu 450,2 mg (Do₃TAC)CrCl₃ (0,6 mmol) gelöst in 100 ml Toluol wurden 970 mg Dimethylaniliniumtetrakis(pentafluorophenyl)borat (1,2 mmol) gegeben und auf 80°C erwärmt. Nach Abkühlen auf Raumtemperatur wurden erst 15 ml Tibal (2M in Toluol) (15 mmol) und anschließend 6 g Kieselgel (600°C calciniert) zum Reaktionsgemisch zugegeben. Dann wurde die Suspension 1 Stunde bei Raumtemperatur gerührt und anschließend das Lösungsmittel im Vakuum entfernt. Ausbeute 12,6 g geträgerter Katalysator.

Die Polymerisation wurde wie in Beispiel 55 unter Verwendung des geträgerten Katalysators aus Beispiel 59 durchgeführt. Polymerisationsbedingungen und Produktdaten können aus Tabelle 5 entnommen werden.

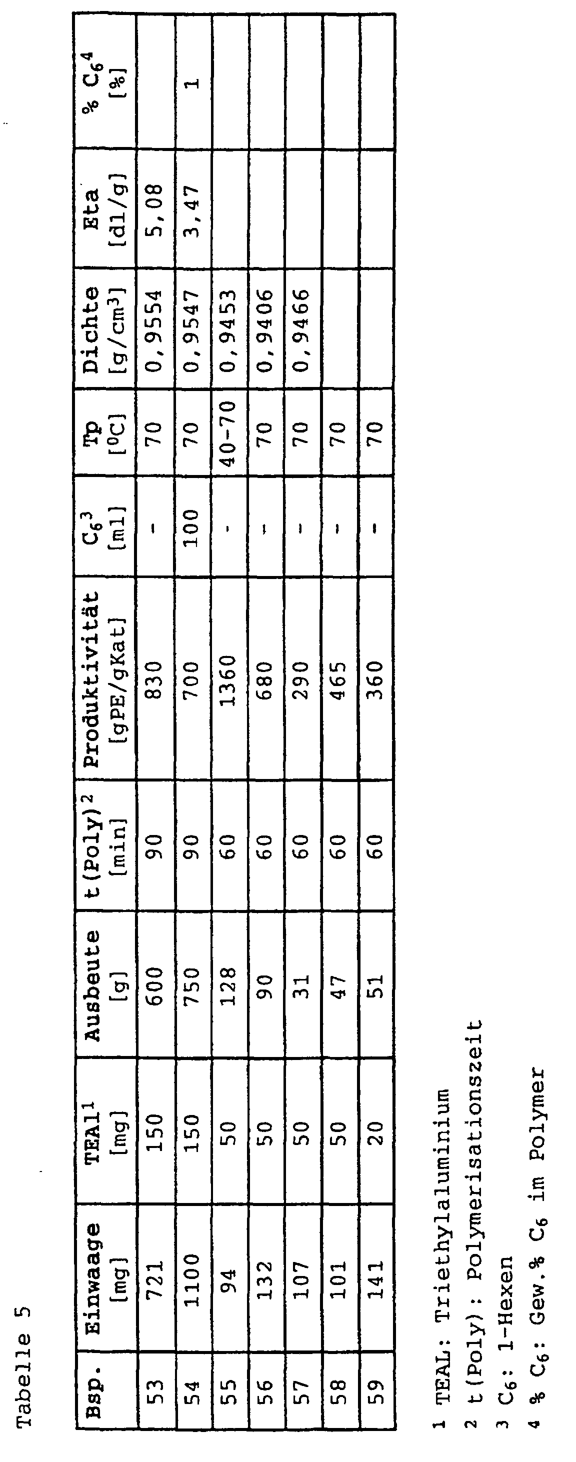

## Patentansprüche

1. Verfahren zur Copolymerisation von Ethylen oder Propylen miteinander oder mit anderen olefinisch ungesättigten Verbindungen, **dadurch gekennzeichnet, daß** man die Polymerisation in Gegenwart eines Katalysatorsystems vornimmt, welches die folgenden Komponenten enthält:
A) einen Komplex eines Übergangsmetalls mit einem oder zwei substituierten oder unsubstituierten 1,3,5-Triazacyclohexan-Liganden oder entsprechenden Liganden, bei denen eines oder mehrere der Ringstickstoffatome durch Phosphor- oder Arsenatome ersetzt sind, und
B) gewünschtenfalls eine oder mehrere Aktivatorverbindungen.

2. Verfahren zur Copolymerisation von Ethylen oder Propylen miteinander oder mit anderen olefinisch ungesättigten Verbindungen bei Temperaturen von 20 bis 300°C und Drücken von 5 bis 4000 bar, welches **dadurch gekennzeichnet ist, daß** es die folgenden Verfahrensschritte enthält:
a) Kontaktieren eines Komplexes eines Übergangsmetalls mit einem oder zwei substituierten oder unsubstituierten 1,3,5-Triazacyclohexan-Liganden (A) mit mindestens einer Aktivatorverbindung (B),
b) Kontaktieren des Reaktionsproduktes aus Schritt (a) mit den olefinisch ungesättigten Verbindungen unter Polymerisationsbedingungen.

3. Verfahren nach Anspruch 1 oder 2, **dadurch gekennzeichnet, daß** man als Komponente (A) eine Verbindung der allgemeinen Formel I 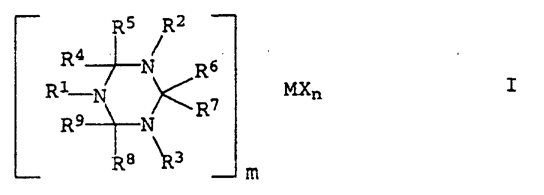 einsetzt, in welcher die Variablen die folgende Bedeutung haben:
M ein Übergansmetall der Gruppen 4 bis 12 des Periodensystems,
R¹-R⁹ Wasserstoff oder Si- oder C-organische Substituenten mit 1 bis 30 C-Atomen, wobei zwei geminale oder vicinale Reste R¹ bis R⁹ auch zu einem fünf- oder sechsgliedrigen Ring verbunden sein können, wobei, wenn m gleich 2 ist, ein Rest R¹-R⁹ von jeweils einem Triazacylohexanring zusammen mit einem dieser Substituenten des anderen Triazacyclohexanringes auch ein Brückenglied zwischen den beiden Ringen darstellen kann,
X Fluor, Chlor, Brom, Jod, Wasserstoff, C₁- bis C₁₀-Alkyl, C₆- bis C₁₅-Aryl oder Alkylaryl mit 1 bis 10 C-Atomen im Alkylrest und 6 bis 20 C-Atomen im Arylrest, Trifluoracetat, BF₄⁻, PF₆⁻, oder sperrige nichtkoordinierende Anionen,
m 1 oder 2,
n eine Zahl von 1 bis 4, welche der Oxidationsstufe des Übergangsmetalles M entspricht.

4. Verfahren nach den Ansprüchen 1 bis 3, **dadurch gekennzeichnet, daß** M ein Übergangsmetall der Gruppe 6 des Periodensystems ist.

5. Verfahren nach den Ansprüchen 1 bis 4, **dadurch gekennzeichnet, daß** man als Monomere Gemische von Ethylen mit C₃- bis C₈-∝-Olefinen einsetzt.

6. Verfahren nach den Ansprüchen 1 bis 5, **dadurch gekennzeichnet, daß** man als Aktivatorverbindung (B) ein Alumoxan einsetzt.

7. Verfahren nach den Ansprüchen 1 bis 5, **dadurch gekennzeichnet, daß** man als Aktivatorverbindung (B) ein Boran oder Borat mit mindestens 2 substituierten Arylresten einsetzt.

8. Verfahren nach den Ansprüchen 3 bis 7, **dadurch gekennzeichnet, daß** mindestens einer der Reste R¹, R² oder R³ von den übrigen dieser Reste unterschiedlich ist.

9. Katalysator zur Polymerisation von Olefinen, enthaltend mindestens einen Übergangsmetallkomplex (A) gemäß den Ansprüchen 1 bis 4, oder 8 und ein Trägermaterial und gewünschtenfalls. eine oder mehrere Aktivatorverbindungen (B).

10. Verfahren zur Polymerisation oder Copolymerisation von Olefinen, **dadurch gekennzeichnet, daß** man die Polymerisation oder Copolymerisation in Gegenwart eines Katalysators gemäß Anspruch 9 durchführt.

11. Übergangsmetallkomplexe der allgemeinen Formel I gemäß Anspruch 3, **dadurch gekennzeichnet, daß** mindestens eine= der Reste R¹, R² oder R³ von den übrigen dieser Reste unterschiedlich ist.

12. Übergangsmetallkomplex der allgemeinen Formel I gemäß Anspruch 3, **dadurch gekennzeichnet, daß** m gleich 2 ist und ein Rest R¹-R⁹ von jeweils einem Triazacyclohexanring zusammen mit einem dieser Substituenten des anderen Triazacyclohexanrings im Brückenglied zwischen den beiden Ringen darstellt.

13. Verwendung eines Komplexes eines Übergangsmetalls gemäß den Ansprüchen 1 bis 4, 11 oder 12 bei der Copolymerisation von Ethylen oder Propylen miteinander oder mit anderen olefinisch ungesättigten Verbindungen.

## Claims

1. A process for the copolymerization of ethylene or propylene with one another or with other olefinically unsaturated compounds, wherein the polymerization is carried out in the presence of a catalyst system comprising the following components:
A) a complex of a transition metal with one or two substituted or unsubstituted 1,3,5-triazacyclohexane ligands or corresponding ligands in which one or more of the ring nitrogens are replaced by phosphorus or arsenic atoms, and
B) if desired, one or more activator compounds.

2. A process for the copolymerization of ethylene or propylene with one another or with other olefinically unsaturated compounds at from 20 to 300°C and pressures of from 5 to 4 000 bar, which comprises the following process steps:
a) bringing a complex of a transition metal with one or two substituted or unsubstituted 1,3,5-triazacyclohexane ligands (A) into contact with at least one activator compound (B)
b) bringing the reaction product from step (a) into contact with the olefinically unsaturated compounds under polymerization conditions.

3. A process as claimed in claim 1 or 2, wherein the component (A) used is a compound of the formula I 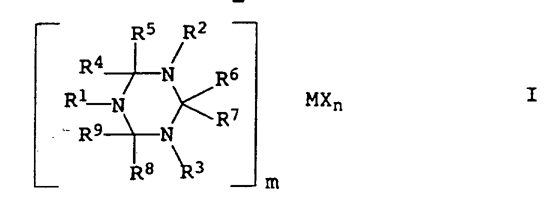 where the variables have the following meanings:
M is a transition metal of groups 4 to 12 of the Periodic Table,
R¹-R⁹ are hydrogen or organosilicon or organic substituents having from 1 to 30 carbon atoms, where two geminal or vicinal radicals R¹ to R⁹ may also be joined to form a 5- or 6-membered ring and, when m is 2, a radical R¹-R⁹ of in each case one triazacyclohexane ring together with one of the substituents from the other triazacyclohexane ring may also form a bridge between the two rings,
X is fluorine, chlorine, bromine, iodine, hydrogen, C₁-C₁₀-alkyl, C₆-C₁₅-aryl or alkylaryl having from 1 to 10 carbon atoms in the alkyl part and from 6 to 20 carbon atoms in the aryl part, trifluoroacetate, BF₄⁻, PF₆⁻ or a bulky noncoordinating anion,
m is 1 or 2,
n is a number from 1 to 4 corresponding to the oxidation state of the transition metal M.

4. A process as claimed in any of claims 1 to 3, wherein M is a transition metal of group 6 of the Periodic Table.

5. A process as claimed in any of claims 1 to 4, wherein the monomers used are mixtures of ethylene with C₃-C₈-α-olefins.

6. A process as claimed in any of claims 1 to 5, wherein the activator compound (B) used is an aluminoxane.

7. A process as claimed in any of claims 1 to 5, wherein the activator compound (B) used is a borane or borate having at least 2 substituted aryl radicals.

8. A process as claimed in any of claims 3 to 7, wherein at least one of the radicals R¹, R² or R³ is different from the other two of these radicals.

9. A catalyst for the polymerization of olefins comprising at least one transition metal complex (A) as claimed in any of claims 1 to 4 and 8 and a support material and, if desired, one or more activator compounds (B).

10. A process for the polymerization or copolymerization of olefins, wherein the polymerization or copolymerization is carried out in the presence of a catalyst as claimed in claim 9.

11. A transition metal complex of the formula I as described in claim 3, wherein at least one of the radicals R¹, R² or R³ is different from the other two of these radicals.

12. A transition metal complex of the formula I as described in claim 3, wherein m is 2 and a radical R¹-R⁹ of in each case one triazacyclohexane ring together with one of the substituents of the other triazacyclohexane ring forms a bridge between the two rings.

13. The use of a complex of a transition metal as described in any of claims 1 to 4, 11 and 12 in the copolymerization of ethylene or propylene with one another or with other olefinically unsaturated compounds.

## Revendications

1. Procédé pour la copolymérisation d'éthylène ou de propylène l'un avec l'autre ou avec d'autres composés à insaturation oléfinique, **caractérisé par le fait qu'**on effectue la polymérisation en présence d'un système de catalyseur qui contient les composants suivants:
A) un complexe d'un métal de transition avec un ou deux ligands 1,3,5-triazacyclohexane substitués ou non-substitués ou des ligands correspondants dans lesquels un ou plusieurs atomes d'azote du cycle sont remplacés par des atomes de phosphore ou d'arsenic, et
B) éventuellement un ou plusieurs composés activateurs.

2. Procédé pour la copolymérisation d'éthylène ou de propylène l'un avec l'autre ou avec d'autres composés à insaturation oléfinique à des températures de 20 à 300°C et des pressions de 5 à 4000 bar, qui est **caractérisé par le fait qu'**il comporte les étapes opératoires suivantes:
a) mise en contact d'un complexe d'un métal de transition avec un ou deux ligands 1,3,5-triazacyclohexane substitués ou non-substitués (A) avec au moins un composé activateur (B),
b) mise en contact du produit de réaction de l'étape (a) avec les composés à insaturation oléfinique dans des conditions de polymérisation.

3. Procédé selon la revendication 1 ou 2, **caractérisé par le fait qu'**on met en oeuvre comme composant (A) un composé de formule générale I 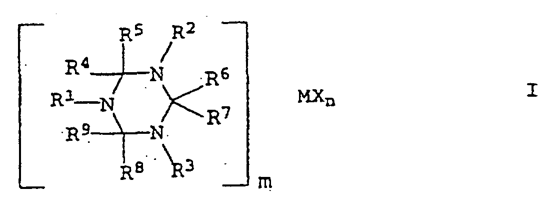 dans laquelle les variables ont la signification suivante:
M un métal de transition des groupes 4 à 12 de la classification périodique des éléments,
R¹-R⁹ l'hydrogène ou des substituants organiques Si ou C ayant 1 à 30 atomes de carbone, tandis que deux restes R¹ à R⁹ géminés ou vicinaux peuvent également être liés à un cycle à cinq ou six chaînons, tandis que, quand m vaut 2, un reste R¹-R⁹ à chaque fois d'un cycle triazacyclohexane peut représenter conjointement avec un de ces substituants de l'autre cycle triazacyclohexane également un élément de pontage entre les deux cycles,
X le fluor, le chlore, le brome, l'iode, l'hydrogène, un alkyle en C₁ à C₁₀, un aryle en C₆ à C₁₅ ou un alkylaryle ayant 1 à 10 atomes de carbone dans le reste alkyle et 6 à 20 atomes de carbone dans le reste aryle, le trifluoroacétate, BF₄⁻, PF₆⁻, ou des anions encombrants non-coordinants,
m 1 ou 2,
n un nombre de 1 à 4, qui correspond à l'état d'oxydation du métal de transition M.

4. Procédé selon les revendications 1 à 3, **caractérisé par le fait que** M est un métal de transition du groupe 6 de la classification périodique des éléments.

5. Procédé selon les revendications 1 à 4, **caractérisé par le fait qu'**on met en oeuvre comme monomères des mélanges d'éthylène avec des -oléfines en C₃ à C₈.

6. Procédé selon les revendications 1 à 5, **caractérisé par le fait qu'**on met en oeuvre comme composé activateur (B) un alumoxane.

7. Procédé selon les revendications 1 à 5, **caractérisé par le fait qu'**on met en oeuvre comme composé activateur (B) un borane ou un borate ayant au moins 2 restes aryle substitués.

8. Procédé selon les revendications 3 à 7, **caractérisé par le fait qu'**au moins l'un des restes R¹, R² ou R³ est différent des autres de ces restes.

9. Catalyseur pour la polymérisation d'oléfines, contenant au moins un complexe de métal de transition (A) selon les revendications 1 à 4, ou 8 et un matériau support et éventuellement un ou plusieurs composés activateurs (B).

10. Procédé pour la polymérisation ou la copolymérisation d'oléfines, **caractérisé par le fait qu'**on effectue la polymérisation ou la copolymérisation en présence d'un catalyseur selon la revendication 9.

11. Complexes de métal de transition de formule générale I selon la revendication 3, **caractérisé par le fait qu'**au moins l'un des restes R¹, R² ou R³ est différent des autres de ces restes.

12. Complexe de métal de transition de formule générale I selon la revendication 3, **caractérisé par le fait que** m vaut 2 et un reste R¹-R⁹ d'un cycle triazacyclohexane représente à chaque fois conjointement avec l'un de ces substituants de l'autre cycle triazacyclohexane un élément de pontage entre les deux cycles.

13. Utilisation d'un complexe d'un métal de transition selon les revendications 1 à 4, 11 ou 12 dans la copolymérisation d'éthylène ou de propylène l'un avec l'autre ou avec d'autres composés à insaturation oléfinique.
